# EUROPEAN PATENT APPLICATION

(11) **EP 4 579 820 A1**
(43) Date of publication of application: **02.07.2025**
(21) Application number: 22960005.1
(22) Date of filing: 29.09.2022
(51) Int. Cl.: H01M 4/64, H01M 4/13, H01M 50/536

(54) **ELECTROCHEMICAL APPARATUS AND ELECTRICAL DEVICE**

(71) Applicant: Ningde Amperex Technology Limited, Ningde, Fujian 352100 (CN)
(72) Inventor: LI, Fangfang, Ningde, Fujian 352100 (CN); DAI, Zhifang, Ningde, Fujian 352100 (CN); HU, Xiaoming, Ningde, Fujian 352100 (CN)
(74) Representative: Icosa
(86) International application number: PCT/CN2022/122465
(87) International publication number: WO 2024/065364

(57) **Abstract**

Some embodiments of this application provide an electrochemical apparatus and an electrical device. The electrochemical apparatus includes an electrode plate. The electrode plate includes a current collector and an active material layer disposed on the surface of the current collector, and in an unwinding state of the electrode plate, a plurality of non-coated regions extend along width direction of the electrode plate on edges of the current collector, an electrode tab connecting sheet is provided with on the surface of each non-coated region, and the electrode tab connecting sheet is electrically connected to the non-coated region; where thickness L1 of the electrode tab connecting sheet satisfies: 3 µm ≤ L1 ≤ 35 µm, and/or fracture strength S1 of the electrode tab connecting sheet satisfies: 200 MPa ≤ S1 ≤ 880 MPa.

## Description

### TECHNICAL FIELD

Some embodiments of this application relate to the field of electrochemical technologies, and particularly to an electrochemical apparatus and an electrical device.

### BACKGROUND

With the continuous development of science and technology, electrochemical apparatuses (including but not limited to lithium-ion batteries and sodium-ion batteries) have been widely used, providing convenience for people using devices such as tablets, mobile phones, electric vehicles, and energy storage devices.

In a type of electrochemical apparatus in the related art, the electrochemical apparatus includes a cathode electrode plate, an anode electrode plate, and a separator disposed between them. During the process of preparation, multiple structures for leading out electrode tabs need to be die-cut in non-coated regions on edges of current collectors of the cathode electrode plate and the anode electrode plate, and the electrode tabs are electrically connected to these structures.

For such type of electrochemical apparatus, during the preparation process of the electrode plates, one method is to first perform cold pressing on the electrode plates with the active material layer before die-cutting. Due to the different thicknesses between the active material layer and the non-coated regions on the edges of the current collectors, the electrode plates tend to wrinkle during the process of cold pressing. Therefore, before cold pressing, the non-coated regions on the edges of the current collectors of the electrode plate are usually stretched, so that the deformation degrees of the non-coated regions on the edges of the current collectors and the active material layer tend to be the same, thereby preventing wrinkling of the electrode plates during subsequent cold pressing. However, during the process of stretching, due to different stretching degrees at different positions, the strengths at various positions in the non-coated regions on the edges of the current collectors tend to vary. Also, because the non-coated regions on edges of the current collectors pass through the roller at high speed and are likely to have no enough time to quickly fit the roller surface of the cold press roller, this makes the non-coated regions on the edges of the current collectors more likely to deform and further makes the structures die-cut from the non-coated regions on the edges of the current collectors for leading out electrode tabs more prone to folding, greatly reducing the preparation yield of the electrochemical apparatus.

### SUMMARY

In view of this, some embodiments of this application provide an electrochemical apparatus and an electrical device to at least partially solve the foregoing problems.

According a first aspect of some embodiments of this application, an electrochemical apparatus is provided, including an electrode plate. The electrode plate includes a current collector and an active material layer disposed on the surface of current collector, and in an unwinding state of electrode plate, a plurality of non-coated regions extend along width direction of the electrode plate on edges of the current collector, an electrode tab connecting sheet is provided on the surface of each non-coated region, and the electrode tab connecting sheet is electrically connected to the non-coated region, where thickness L1 of the electrode tab connecting sheet satisfies: 3 µm ≤ L1 ≤ 35 µm, and/or fracture strength S1 of the electrode tab connecting sheet satisfies: 200 MPa ≤ S1 ≤ 880 MPa.

In some embodiments of this application, the non-coated region of the current collector of the electrode plate of the electrochemical apparatus is electrically connected to the electrode tab connecting sheet. Therefore, in these embodiments of this application, in leading out the electrode tab from the non-coated region of the current collector (that is, a blank region extending on the edge of the current collector), the electrode tab is no longer electrically connected directly on the non-coated region but is electrically connected via the electrode tab connecting sheet welded to the non-coated region. This allows the non-coated region of the electrode plate to not be stretched before cold pressing of the electrode plate during the preparation of the electrode plate of the electrochemical apparatus, and the problem of wrinkling of the electrode plate to be alleviated during subsequent cold pressing of the electrode plate. In these embodiments, the thickness L1 of the electrode tab connecting sheet satisfies: 3 µm ≤ L1 ≤ 35 µm, and/or the fracture strength S1 of the electrode tab connecting sheet satisfies: 200 MPa ≤ S1 ≤ 880 MPa, and the electrode tab connecting sheet welded to the non-coated region acts as an extension of the non-coated region. Compared to the non-coated region alone, the welded non-coated region and the electrode tab connecting sheet can better fit the surface of the cold press roller when passing through the roller, and the welded non-coated region and the electrode tab connecting sheet are less likely to deform, thereby alleviating the problem that the non-coated region is prone to folding and thus increasing the preparation yield of the electrochemical apparatus.

In some optional embodiments, the thickness L1 of the electrode tab connecting sheet satisfies: 8 µm ≤ L1 ≤ 20 µm. With the thickness L1 of the electrode tab connecting sheet in this application satisfying this value range, no much extra costs are incurred under existing process conditions (that is, without upgrade of the process or device), the preparation yield of the electrochemical apparatus can be further increased, and the disadvantages caused by the electrode tab connecting sheet being too thick or too thin can be better avoided.

In some optional embodiments, the fracture strength S1 of the electrode tab connecting sheet satisfies: 420 Mpa ≤ S1 ≤ 800 MPa. With the fracture strength S1 of the electrode tab connecting sheet in this application satisfying this value range, no much extra costs are incurred under existing process conditions, the preparation yield of the electrochemical apparatus is further increased, and the disadvantages caused by the fracture strength of the electrode tab connecting sheet being too large or too small can be better avoided.

In some optional embodiments, thickness L2 of the non-coated region satisfies: 2 µm ≤ L2 ≤ 18 µm.

A too-thin non-coated region increases the process difficulty of manufacturing the anode electrode plate, leads to increased costs, and results in lower strength and difficulty in satisfying the structural strength requirements of the anode electrode plate. A too-thick non-coated region increases material costs, making the overall volume of the electrochemical apparatus larger, thereby reducing the energy density gains of the electrochemical apparatus, and proposing higher requirements on the welding device and process. With the thickness L2 of the non-coated region in this application satisfying this value range, the disadvantages of the non-coated region being too thin and the disadvantages of the non-coated region being too thick can be better avoided, thereby meeting the usage needs of the electrochemical apparatus and increasing the preparation yield of the electrochemical apparatus.

In some optional embodiments, the thickness L2 of the non-coated region satisfies: 3 µm ≤ L2 ≤ 10 µm. Within this value range, the energy requirements of the electrochemical apparatus can also be met under existing process conditions.

In some optional embodiments, fracture strength S2 of the non-coated region satisfies: 150 Mpa ≤ S2 ≤ 650 MPa.

The non-coated region with a too-low fracture strength S2 is prone to breakage during the preparation and results in difficulty in meeting the structural strength requirements of the anode electrode plate. The non-coated region with a too-high fracture strength S2 increases the process difficulty in manufacturing the anode electrode plate and leads to increased costs. With the fracture strength S2 of the non-coated region in these embodiments satisfying the foregoing value range (that is, 150 MPa ≤ S2 ≤ 650 Mpa), the disadvantages of the fracture strength of the non-coated region being too low and the disadvantages of the fracture strength of the non-coated region being too high can be better avoided, thereby meeting the usage needs of the electrochemical apparatus and increasing the preparation yield of the electrochemical apparatus.

In some optional embodiments, the fracture strength S2 of the non-coated region satisfies: 280 Mpa ≤ S2 ≤ 550 MPa. Within this value range, the energy requirements of the electrochemical apparatus can also be met under existing process conditions.

In some optional embodiments, in the width direction of the electrode plate, width W1 of the electrode tab connecting sheet satisfies: 3 mm ≤ W1 ≤ 35 mm.

When the width of the electrode tab connecting sheet is too small, it is difficult to weld the electrode tab connecting sheet to the non-coated region during the preparation of the electrochemical apparatus. When the width of the electrode tab connecting sheet is too large, during the preparation of the anode electrode plate, the edge of the electrode tab connecting sheet is prone to collapse during die-cutting, affecting the die-cutting precision. Especially in using laser cutting for die-cutting operations, severe deviation of the laser focus from the cutting surface can lead to incomplete cutting and potentially lead to accidental breakage of the electrode tab connecting sheet. With the width of the electrode tab connecting sheet in these embodiments satisfying the foregoing value range (that is, 3 mm ≤ W1 ≤ 35 mm), the disadvantages of the width of the electrode tab connecting sheet being too small and the disadvantages of the width of the electrode tab connecting sheet being too large can be better avoided, thereby meeting the usage needs of the electrochemical apparatus and increasing the preparation yield of the electrochemical apparatus.

In some optional embodiments, the width W1 of the electrode tab connecting sheet satisfies: 5 mm ≤ W1 ≤ 25 mm. Within this value range, the disadvantages of the width of the electrode tab connecting sheet being too small and the disadvantages of the width of the electrode tab connecting sheet being too large can be better avoided, thereby meeting the usage needs of the electrochemical apparatus and further increasing the preparation yield of the electrochemical apparatus.

In some optional embodiments, in the width direction of the electrode plate, width W2 of the non-coated region satisfies: 0.5 mm ≤ W2 ≤ 15 mm.

When the width of the non-coated region is too small, it is difficult to ensure the welding width during the preparation of the electrochemical apparatus, making it difficult to weld the electrode tab connecting sheet to the non-coated region. When the width of the non-coated region is too large, the non-coated region is more prone to wrinkling after cold pressing during the preparation of the anode electrode plate, making it difficult to gathering the die-cut electrode tab connecting sheets welded to the non-coated regions, and this is likely to increase energy density losses and leads to increased costs. With the width of the non-coated region in these embodiments satisfying the foregoing value range (that is, 0.5 mm ≤ W2 ≤ 15 mm), the disadvantages of the width of the non-coated region being too small and the disadvantages of the width of the non-coated region being too large can be better avoided, thereby meeting the usage needs of the electrochemical apparatus and increasing the preparation yield of the electrochemical apparatus.

In some optional embodiments, the width W2 of the non-coated region satisfies: 1 mm ≤ W2 ≤ 10 mm. Within this value range, the disadvantages of the width of the non-coated region being too small and the disadvantages of the width of the non-coated region being too large can be better avoided, thereby meeting the usage needs of the electrochemical apparatus and further increasing the preparation yield of the electrochemical apparatus.

In some optional embodiments, in the width direction of the electrode plate, the active material layer includes a first side away from the non-coated region and a second side close to the non-coated region, and the electrode tab connecting sheet includes a first side and a second side, where the first side of the electrode tab connecting sheet is close to the first side of the active material layer, and the second side of the electrode tab connecting sheet is away from the first side of the active material layer. Under the condition that the first side of the electrode tab connecting sheet is located on the active material layer, distance W3 between the first side of the electrode tab connecting sheet and the second side of the active material layer satisfies: 0 mm ≤ W3 ≤ 8 mm; or, under the condition that the first side of the electrode tab connecting sheet is located on the non-coated region, the distance W3 between the first side of the electrode tab connecting sheet and the second side of the active material layer satisfies: 0 mm ≤ W3 ≤ 10 mm.

The first side of the electrode tab connecting sheet being located on the active material layer means that after the electrode tab connecting sheet is welded to the non-coated region, a first end of the electrode tab connecting sheet extends beyond the first side of the non-coated region along a direction opposite to the width direction of the electrode plate. The first end extending too much (for example, W3 > 8 mm) is likely to cause the thickness of the prepared electrochemical apparatus to be too large. When the first side of the electrode tab connecting sheet is located on the non-coated region and the distance W3 between the first side of the electrode tab connecting sheet and the second side of the active material layer is too large (for example, W3 > 10 mm), the problem that the non-coated region is prone to folding after the non-coated region and the electrode tab connecting sheet are welded cannot be effectively alleviated. With W3 in this application satisfying the foregoing value range, the disadvantages of the first end of the electrode tab connecting sheet extending too much beyond the first side of the non-coated region along the direction opposite to the width direction of the electrode plate and the disadvantages caused by a too-large W3 when the first side of the electrode tab connecting sheet is located on the non-coated region can be better avoided, thereby meeting the usage needs of the electrochemical apparatus and increasing the preparation yield of the electrochemical apparatus.

In some optional embodiments, the first side of the electrode tab connecting sheet is located on the non-coated region, and the distance W3 between the first side of the electrode tab connecting sheet and the second side of the active material layer satisfies: 0 mm ≤ W3 ≤ 5 mm. Within this value range, the disadvantages caused by a too-large W3 when the first side of the electrode tab connecting sheet is located on the non-coated region can be better avoided, thereby meeting the usage needs of the electrochemical apparatus and further increasing the preparation yield of the electrochemical apparatus.

In some optional embodiments, a first welding mark is formed when the non-coated region and the electrode tab connecting sheet are welded; and in the width direction of the electrode plate, the active material layer includes a first side away from the non-coated region and a second side close to the non-coated region, and the first welding mark includes a first side and a second side, where the first side of the first welding mark is close to the first side of the active material layer, and the second side of the first welding mark is away from the first side of the active material layer; where the second side of the first welding mark is located on the electrode tab connecting sheet. Based on this, the second side of the first welding mark is located on the electrode tab connecting sheet, ensuring that the electrode tab connecting sheet can form a stable welded connection with the non-coated region.

In some optional embodiments, in the width direction of the electrode plate, width W4 of the first welding mark satisfies: 0.1 mm ≤ W4 ≤ 10 mm.

When the width of the first welding mark is too small, it is difficult to ensure that the welding tension between the non-coated region and the electrode tab connecting sheet meets the requirements, leading to the foregoing disadvantage of insufficient welding tension. When the width of the first welding mark is too large, after the non-coated regions and the electrode tab connecting sheets of the anode electrode plate are die cut, it is difficult to gather the die-cut electrode tab connecting sheets, additionally increasing costs. With the width of the first welding mark in these embodiments satisfying the foregoing value range (0.1 mm ≤ W4 ≤ 10 mm), the disadvantages of the width of the first welding mark being too small and the disadvantages of the width of the first welding mark being too large can be avoided, thereby meeting the usage needs of the electrochemical apparatus and increasing the preparation yield of the electrochemical apparatus.

In some optional embodiments, in the width direction of the electrode plate, the electrode tab connecting sheet includes a first side and a second side, where the first side of the electrode tab connecting sheet is close to the first side of the active material layer, and the second side of the electrode tab connecting sheet is away from the first side of the active material layer. Under the condition that the first side of the first welding mark is located on the non-coated region, distance W5 between the first side of the first welding mark and the first side of the electrode tab connecting sheet satisfies: 0 mm ≤ W5 ≤ 5 mm; or, under the condition that the first side of the first welding mark is located on the electrode tab connecting sheet, the distance W5 between the first side of the first welding mark and the first side of the electrode tab connecting sheet satisfies: 0 mm ≤ W5 ≤ 25 mm.

When the first side of the first welding mark extends too much beyond the first side of the electrode tab connecting sheet along the direction opposite to the width direction of the electrode plate (for example, when the first side of the first welding mark is located on the second part and W5 > 5 mm), portions without anode active material occupy a large area so that the space proportion of the portions not capable of providing energy is large accordingly. This results in severe energy density loss, making it difficult to gather the die-cut electrode tab connecting sheets and subsequently affecting the welding of the anode electrode tab and the electrode tab connecting sheet. In the process, it is also likely to damage the electrode tab connecting sheet, ultimately affecting the electrical performance of the prepared electrochemical apparatus. When the first side of the first welding mark extends too much beyond the first side of the electrode tab connecting sheet along the width direction of the electrode plate (for example, when the first side of the first welding mark is located on the electrode tab connecting sheet and W5 > 25 mm), the electrode tab connecting sheet is too wide in an unrestrained state, affecting die-cutting during the preparation of the anode electrode plate, increasing process difficulty, and compromising the preparation yield of the electrochemical apparatus. In these embodiments of this application, with the use of such a value range of W5, the disadvantages caused by the first side of the first welding mark extending too much beyond the electrode tab connecting sheet along the direction opposite to the width direction of the electrode tab and the disadvantages caused by the first side of the first welding mark extending too much beyond the electrode tab connecting sheet along the width direction of the electrode tab can be avoided, thereby meeting the usage needs of the electrochemical apparatus and increasing the preparation yield of the electrochemical apparatus.

In some optional embodiments, under the condition that the first side of the first welding mark is located on the non-coated region, the distance W5 between the first side of the first welding mark and the first side of the electrode tab connecting sheet satisfies: 0 mm ≤ W5 ≤ 3 mm; or, under the condition that the first side of the first welding mark is located on the tab connecting sheet, the distance W5 between the first side of the first welding mark and the first side of the tab connecting sheet satisfies: 0 mm ≤ W5 ≤ 10 mm. Within such a value range, the disadvantages caused by the first side of the first welding mark extending too much beyond the first side of the electrode tab connecting sheet along the direction opposite to the width direction of the electrode tab and the disadvantages caused by the first side of the first welding mark extending too much beyond the first side of the electrode tab connecting sheet along the width direction of the electrode tab can be better avoided, thereby further meeting the usage needs of the electrochemical apparatus and further increasing the preparation yield of the electrochemical apparatus.

In some optional embodiments, in the width direction of the electrode plate, the non-coated region includes a first side and a second side, where the first side of the non-coated region is close to the first side of the active material layer, and the second side of the non-coated region is away from the first side of the active material layer. Under the condition that an overlap is present between a first projection of the second side of the first welding mark on the electrode tab connecting sheet and a second projection of the non-coated region on the electrode tab connecting sheet, distance W6 between the second side of the first welding mark and the second side of the non-coated region satisfies: 0 mm ≤ W6 ≤ 15 mm; or, under the condition that no overlap is present between a first projection of the second side of the first welding mark on the electrode tab connecting sheet and a second projection of the non-coated region on the electrode tab connecting sheet, the distance W6 between the second side of the first welding mark and the second side of the non-coated region satisfies: 0 mm ≤ W6 ≤ 7 mm.

When an overlap is present between the first projection and the second projection, the distance W6 between the second side of the first welding mark and the second side of the non-coated region is too large (for example, when an overlap is present between the first projection and the second projection and W6 > 15 mm), meaning that the second side of the non-coated region extends too much beyond the second side of the first welding mark along the width direction of the electrode plate, the non-coated region is too wide in an unrestrained state, affecting die-cutting during the preparation of the anode electrode plate, increasing process difficulty, and compromising the preparation yield of the electrochemical apparatus. When no overlap is present between the first projection and the second projection, the distance between the second side of the first welding mark and the second side of the non-coated region is too large (for example, when here is no overlap between the first projection and the second projection and W6 > 7 mm), meaning that the second side of the first welding mark extends too much beyond the second side of the non-coated region along the width direction of the electrode plate, this results in severe energy density loss, subsequently affecting the electrical connection between the anode electrode tab and the electrode tab connecting sheet (for example, the anode electrode tab is electrically connected to the electrode tab connecting sheet by welding) and making it difficult to gather the electrode tab connecting sheets die cut. In the process, it is also likely to damage the electrode tab connecting sheet, ultimately compromising the electrical performance of the prepared electrochemical apparatus. In this application, with the use of such a value range of W6, the disadvantages caused by the second side of the non-coated region extending too much beyond the second side of the first welding mark along the width direction of the electrode plate and the disadvantages caused by the second side of the first welding mark extending too much beyond the second side of the non-coated region along the width direction of the electrode plate can be avoided, thereby meeting the usage needs of the electrochemical apparatus and increasing the preparation yield of the electrochemical apparatus.

In some optional embodiments, under the condition that an overlap is present between the first projection of the second side of the first welding mark on the electrode tab connecting sheet and the second projection of the non-coated region on the electrode tab connecting sheet, the distance W6 between the second side of the first welding mark and the second side of the non-coated region satisfies: 0 mm ≤ W6 ≤ 10 mm; or, under the condition that no overlap is present between a first projection of the second side of the first welding mark on the tab connecting sheet and a second projection of the non-coated region on the tab connecting sheet, the distance W6 between the second side of the first welding mark and the second side of the non-coated region satisfies: 0 mm ≤ W6 ≤ 3 mm. Within such a value range, the disadvantages caused by the second side of the non-coated region extending too much beyond the second side of the first welding mark along the width direction of the electrode plate and the disadvantages caused by the second side of the first welding mark extending too much beyond the second side of the non-coated region along the width direction of the electrode plate can be better avoided, thereby meeting the usage needs of the electrochemical apparatus and increasing the preparation yield of the electrochemical apparatus.

In some optional embodiments, the electrochemical apparatus further includes an electrode tab;
an electrical connection is formed between the electrode tab and the electrode tab connecting sheet through welding, and a second welding mark is formed on the electrode tab connecting sheet; and
in the width direction of the electrode plate, the second welding mark includes a first side and a second side, where the first side of the second welding mark is close to the first side of the active material layer, and the second side of the second welding mark is away from the first side of the active material layer;
where distance W7 between the second side of the first welding mark and the first side of the second welding mark satisfies: 0 mm < W7 ≤ 10 mm.

When the anode electrode tab is electrically connected to the electrode tab connecting sheet by welding, the second welding mark formed on the electrode tab connecting sheet should not overlap with the first welding mark. Overlapping will compromise the welding effect between the anode electrode tab and the electrode tab connecting sheet, reducing the welding tension between the anode electrode tab and the electrode tab connecting sheet. If the distance W7 between the second side of the first welding mark and the first side of the second welding mark is too large (for example, W7 > 10 mm), the energy density of the electrochemical apparatus is likely to be compromised. In these embodiments, with the use of such a value range of W7, the disadvantages caused by an overlap between the first welding mark and the second welding mark and the disadvantages caused by the distance W7 between the second side of the first welding mark and the first side of the second welding mark being too large can be avoided, thereby meeting the usage needs of the electrochemical apparatus and increasing the preparation yield of the electrochemical apparatus.

In some optional embodiments, welding tension F between the non-coated region and the electrode tab connecting sheet satisfies: 50 N ≤ F ≤ 1000 N.

A too-low welding tension between the non-coated region and the electrode tab connecting sheet is prone to resulting in falling-off of the electrode tab connecting sheet from the non-coated region during the use of the electrochemical apparatus, while a too-high welding tension between the non-coated region and the electrode tab connecting sheet increases the costs during the preparation of the electrochemical apparatus. In these embodiments, with the welding tension F satisfying the foregoing value range (that is, 50 N ≤ F ≤ 1000 N), the disadvantages caused by the welding tension between the non-coated region and the electrode tab connecting sheet being too low and the disadvantages caused by the welding tension between the non-coated region and the electrode tab connecting sheet being too large can be better avoided, thereby meeting the usage needs of the electrochemical apparatus and increasing the preparation yield of the electrochemical apparatus.

In some optional embodiments, welding tension F between the non-coated region and the electrode tab connecting sheet satisfies: 280 N ≤ F ≤ 500 N. Within such a value range, the disadvantages caused by the welding tension between the non-coated region and the electrode tab connecting sheet being too low and the disadvantages caused by the welding tension between the non-coated region and the electrode tab connecting sheet being too large can be better avoided, thereby meeting the usage needs of the electrochemical apparatus and further increasing the preparation yield of the electrochemical apparatus.

In some optional embodiments, the non-coated region and/or electrode tab connecting sheet is a conductive foil material, and the resistance R per square millimeter of the conductive foil material satisfies: R < 20 mΩ. Based on this, the conductivity of the non-coated region and/or the electrode tab connecting sheet is good, meeting the usage needs of the electrochemical apparatus.

In some optional embodiments, the conductive foil material includes at least one of a copper foil and a copper-plated foil material. Such a conductive foil material can ensure the conductivity of the non-coated region and/or the electrode tab connecting sheet of the anode electrode plate, meeting the usage needs of the electrochemical apparatus.

In some optional embodiments, the electrode plate includes a cathode electrode plate and an anode electrode plate. Based on this, the cathode electrode plate and the anode electrode plate of the electrochemical apparatus are less likely to fold, thereby increasing the preparation yield of the electrochemical apparatus.

According to another aspect of an embodiment of this application, an electrical device is provided, including the electrochemical apparatus according to the first aspect.

The electrical device in these embodiments of this application includes the electrochemical apparatus according to the first aspect. Because the electrochemical apparatus has a high preparation yield, the electrical device also has a high preparation yield.

### BRIEF DESCRIPTION OF DRAWINGS

To more clearly illustrate the technical solutions of some embodiments of this application, the following briefly describes the accompanying drawings required in this application. Apparently, the accompanying drawings in the following descriptions show only some embodiments recorded in this application, and persons of ordinary skill in the art can derive others drawings based on these accompanying drawings.
FIG. 1 is a schematic diagram of an electrochemical apparatus according to an example of an embodiment of this application.
FIG. 2 shows a preparation process of an anode electrode plate of an electrochemical apparatus according to an example in the related art.
FIG. 3A shows a preparation process of an anode electrode plate of an electrochemical apparatus according to an example of an embodiment of this application.
FIG. 3B is an enlarged schematic diagram of position Q in FIG. 3A.
FIG. 4A is a schematic cross-sectional diagram of an anode electrode plate of an example electrochemical apparatus in thickness direction according to an example of an embodiment of this application.
FIG. 4B is a schematic cross-sectional diagram of an anode electrode plate of an example electrochemical apparatus in thickness direction according to another example of an embodiment of this application.
FIG. 4C is a schematic cross-sectional diagram of an anode electrode plate of an example electrochemical apparatus in thickness direction according to yet another example of an embodiment of this application.
FIG. 5 is a schematic diagram of a welding method of ultrasonic seam welding according to an example of an embodiment of this application.
FIG. 6 is a schematic diagram of a first welding mark according to an example of an embodiment of this application.
FIG. 7 is a schematic diagram of a first welding mark according to another example of an embodiment of this application.
FIG. 8 is a schematic diagram of a first welding mark according to yet another example of an embodiment of this application.
FIG. 9 is a schematic diagram of a first welding mark according to yet another example of an embodiment of this application.
FIG. 10 is a schematic diagram of an electrical device according to an example of an embodiment of this application.

### DETAILED DESCRIPTION

To make persons skilled in the art understand the technical solutions in this application better, the following clearly and in detail describes the technical solutions in some embodiments of this application with reference to the accompanying drawings in the embodiments of this application. Apparently, the described embodiments are some rather than all embodiments of this application. All other embodiments obtained by persons of ordinary skill in the art based on the embodiments of this application shall fall within the protection scope of the embodiments of this application.

The following describes specific implementations of an electrochemical apparatus and an electrical device in some embodiments of this application with reference to the accompanying drawings. It should be noted that in each of the following accompanying drawings, the structures are not necessarily drawn to actual scale for ease of illustration.

It should be noted that in the content of these embodiments of this application, a lithium-ion battery is used as an example of an electrochemical apparatus 10 to explain this application. However, the electrochemical apparatus of this application is not limited to the lithium-ion battery and, for example, may alternatively be the sodium-ion battery or the like.

According to a first aspect of an embodiment of this application, an electrochemical apparatus is provided, including an electrode plate. The electrode plate includes a current collector and an active material layer disposed on the surface of current collector, and in an unwinding state of electrode plate, a plurality of non-coated regions extend along width direction of the electrode plate on edges of the current collector, an electrode tab connecting sheet is provided on the surface of each non-coated region, and the electrode tab connecting sheet is electrically connected to the non-coated region.

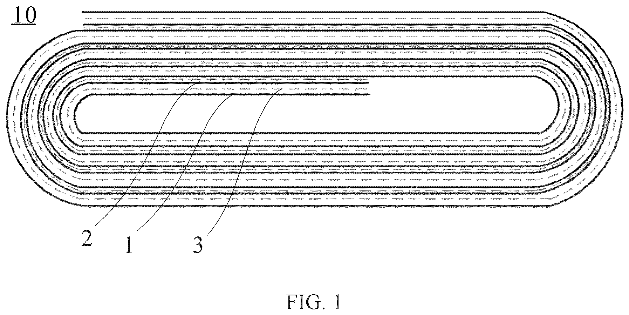

The electrode plate in this embodiment of the application may be a cathode electrode plate, or may be an anode electrode plate. Referring to FIG. 1, an electrochemical apparatus 10 may be formed by winding an anode electrode plate 1, a cathode electrode plate 2, and a separator 3. It should be understood that this is merely illustrative and should not be considered as any limitation on this embodiment. Specifically, after the electrochemical apparatus 10 is formed by winding, the separator 3 is disposed between the cathode electrode plate 2 and the anode electrode plate 1 and can separate the cathode electrode plate 2 from the anode electrode plate 1 to prevent an internal short circuit between the anode and cathode of the electrochemical apparatus 10, allow ions to pass through, and maintain the functions of an electrolyte between the cathode electrode plate 2, the separator 3, and the anode electrode plate 1. Referring to FIG. 1 to FIG. 9 and taking the electrode plate as the anode electrode plate 1 as an example, a current collector 11 includes a body region 111 and a non-coated region 112 connected to each other, an active material layer 12 is disposed on the body region 111, a non-coated region 112 is welded to an electrode tab connecting sheet 5, and an electrode tab 4 is electrically connected to the electrode tab connecting sheet 5; where thickness L1 of the electrode tab connecting sheet 5 satisfies: 3 µm ≤ L1 ≤ 35 µm, and/or fracture strength S1 of the electrode tab connecting sheet 5 satisfies: 200 MPa ≤ S1 ≤ 880 MPa.

In some embodiments of this application, the non-coated region 112 of the current collector 11 of the anode electrode plate 1 of the electrochemical apparatus 10 is welded to the electrode tab connecting sheet 5. Therefore, in these embodiments of this application, in leading out the anode electrode tab 4 from the non-coated region 112 of the current collector 112 (that is, a blank region extending on the edge of the current collector 11), the anode electrode tab 4 is no longer electrically connected directly on the non-coated region 112 but is electrically connected via the electrode tab connecting sheet 5 welded to the non-coated region 112. This allows the non-coated region 112 (that is, the blank region on the edge of the current collector 11) of the anode electrode plate 1 to not be stretched before cold pressing of the anode electrode plate 1 during the preparation of the anode electrode plate 1 of the electrochemical apparatus 10, and the problem of wrinkling of the anode electrode plate 1 to be alleviated during subsequent cold pressing of the anode electrode plate 1. In these embodiments, the thickness L1 of the electrode tab connecting sheet 5 satisfies: 3 µm ≤ L1 ≤ 35 µm, and/or the fracture strength S1 of the electrode tab connecting sheet 5 satisfies: 200 MPa ≤ S1 ≤ 880 MPa, and the electrode tab connecting sheet 5 welded to the non-coated region 112 acts as an extension of the non-coated region 112. Compared to the non-coated region alone, the welded non-coated region 112 and the electrode tab connecting sheet 5 can better fit the surface of the cold press roller when passing through the roller, and the welded non-coated region 112 and the electrode tab connecting sheet 5 are less likely to deform, thereby alleviating the problem that the non-coated region is prone to folding and thus increasing the preparation yield of the electrochemical apparatus.

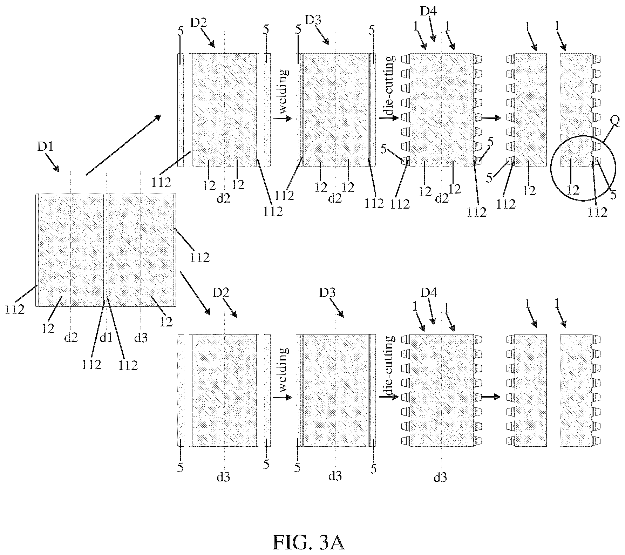

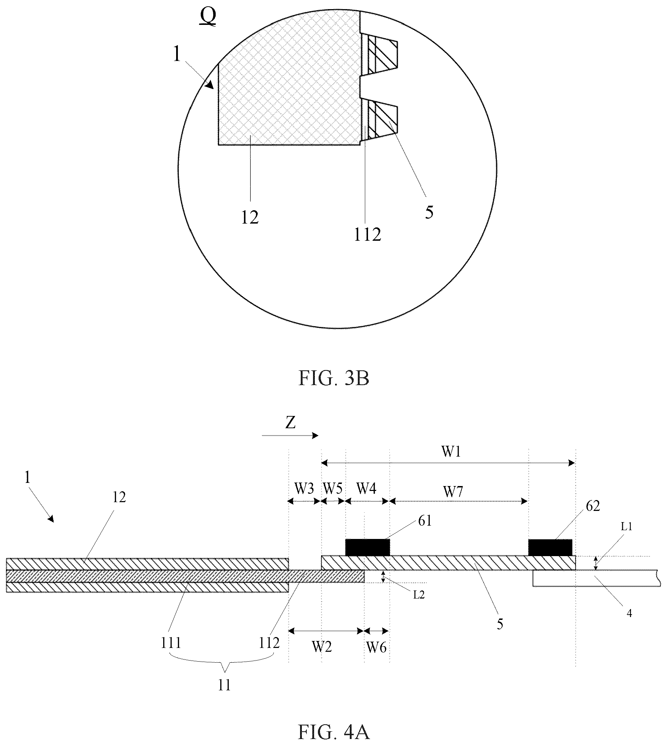

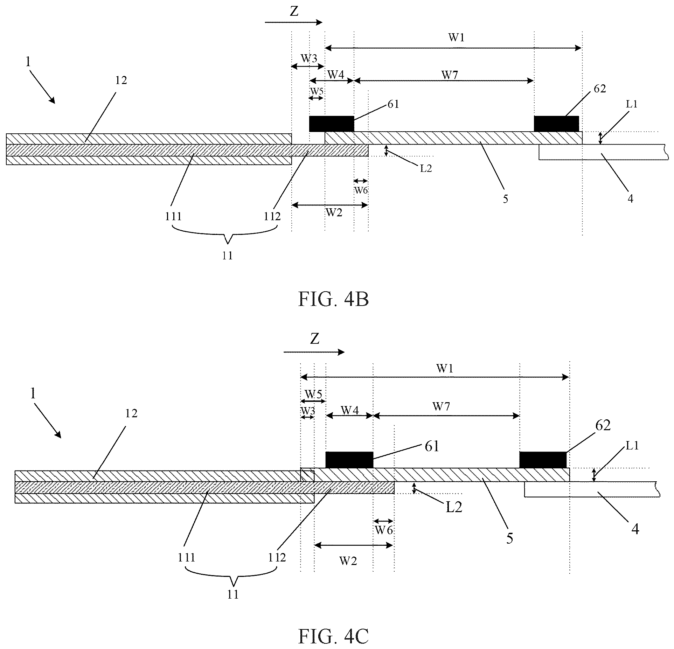

Specifically, reference may be made to FIG. 4A, FIG. 4B, and FIG. 4C. These figures are schematic cross-sectional diagrams of the anode electrode plate 1 shown in FIG. 3A in thickness direction, where schematic diagrams of the electrode plate in width direction Z (in the unwinding state of the electrode plate) are also illustrated. From the current collector 11 in FIG. 4A, FIG. 4B, and FIG. 4C, in the width direction Z of the electrode plate, there are the body region 111 and the non-coated region 112, and both are integrally formed.

FIG. 4A, FIG. 4B, and FIG. 4C also schematically show the position of the anode electrode tab 4 electrically connected to the electrode tab connecting sheet 5. It should be understood that FIG. 4A, FIG. 4B, and FIG. 4C are only for illustrative purposes of these embodiments and should not be considered as any limitation on these embodiments.

The non-coated region 112 being welded to the electrode tab connecting sheet 5 means that the electrode tab connecting sheet 5 acts as an extension of the non-coated region 112.

It should be understood that in any embodiment of this application, if the electrode plate is an anode electrode plate 1, the active material layer 12 is an anode active material layer, the current collector 11 is an anode current collector, and this can be understood in conjunction with FIG. 4A, FIG. 4B, and FIG. 4C; and if the electrode plate is a cathode electrode plate 1, the active material layer 12 is a cathode active material layer, and the current collector 11 is a cathode current collector.

In these embodiments, the active material layer 12 disposed on the body region 111 of the anode electrode plate 1 includes anode active material. The type of anode active material is not limited herein, and, for example, can be graphite material, silicon-based material, or the like. In some optional implementations, the active material layer 12 may be a coating, that is, the active material layer 12 may be coated on the body region 111, ensuring the structural stability of the active material layer 12 on the body region 111.

Optionally, for the anode electrode plate 1, the width of the body region 111 is equal to the width of the active material layer 12 in the width direction of the electrode plate.

The cathode electrode plate 2 in these embodiments may use any suitable cathode electrode plate in the related art or can be the electrode plate in these embodiments of this application. For example, a cathode active material layer may be provided on the cathode electrode plate 2 (for example, the cathode active material layer may include lithium iron phosphate, lithium manganese oxide, lithium iron phosphate, or the like), the cathode electrode plate 2 may include a cathode current collector, the cathode current collector may include aluminum material, and the cathode electrode plate 2 is further electrically connected to a cathode electrode tab. For another example, the cathode active material layer may be a coating applied to the cathode current collector, the cathode current collector includes non-coated regions, and an insulating coating is provided between the non-coated regions of the current collector and the cathode active material layer. Of course, these are just examples for ease of understanding and are not specifically limited in these embodiments. The anode electrode tab 4 and the cathode electrode tab of the electrochemical apparatus 10 in these embodiments may be located on a same side or different sides of the electrochemical apparatus 10.

Next, the electrochemical apparatus 10 in some embodiments of this application is briefly described in conjunction with the preparation of an anode electrode plate of an electrochemical apparatus in the related art. It should be understood that this is only for ease of understanding and should not be construed as any limitation on these embodiments.

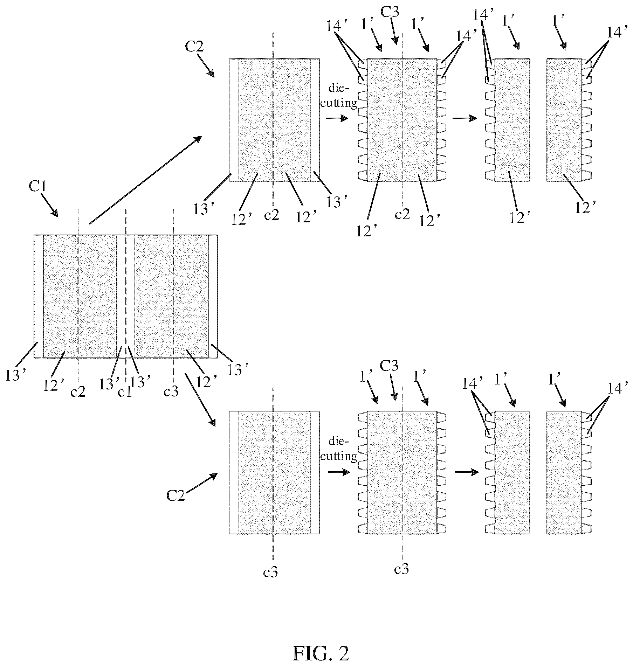

Referring to FIG. 2, a preparation process of an anode electrode plate 1' of an electrochemical apparatus in the related art is shown. In this example, an active material layer of the anode electrode plate is a coating applied to a current collector. Referring to structure C1 in FIG. 2, this structure C1 is actually multiple anode electrode plates not further processed (simply put, the structure C1 is cut along the dashed line c1, and then cut along the dashed lines c2 and c3 respectively, thereby separating structure C1 into 4 anode electrode plates 1', and this process will be specifically described below). After the active material layer 12' is applied to the current collector 11' to obtain structure C1, the structure C1 is cold pressed (for example, a step roller (a special cold press roller) adapted to the structure C1 can be used for cold pressing. When a step roller is used, for each structure C1 with a different size, a step roller with a different size need to be designed for matching. For specific details, reference can be made to the related art of using a step roller to cold press electrode plates, and details are not described herein). During the process of cold pressing, the thicknesses of the non-coated regions 13' on edges of the current collector 11' and the coating region (that is, the active material layer 12') are different in degree of deformation, structure C1 is prone to wrinkling during the process of cold pressing, meaning that an anode electrode plate 1' to be prepared subsequently will wrinkle. Therefore, the non-coated regions 13' on the edges are generally stretched first so that the deformation thereof during the process of cold pressing tends to be the same, thereby preventing the anode electrode plate from wrinkling during the subsequent cold pressing of structure C1. After the steps of stretching and cold pressing are completed, the cold-pressed structure C1 is cut along the dashed line c1 (for example, laser cutting technology may be used as a cutting method), resulting in two structures C2 (each structure C2 is equivalent to two non die-cut anode electrode plates 1'). Next, two sides of the two structures C2 close to non-coated regions 13' on the edges are die-cut separately, resulting in two structures C3 (each structure C3 is equivalent to two die-cut anode electrode plates 1'). Then the two structures C3 are cut along the dashed lines c2 and c3 respectively (for example, laser cutting technology may be used as a cutting method), resulting in 4 anode electrode plates 1' as shown in FIG. 2, where the anode electrode plate 1' includes multiple electrode tab leading-out structures 14' formed by die-cutting the non-coated regions 13' on the edges for leading out electrode tabs. In this example, the electrode tab leading-out structure 14' is trapezoidal, but this is only an example. In preparing an electrochemical apparatus with the finally obtained anode electrode plate 1', the anode electrode plate 1' can be wound with a separator, a cathode electrode plate, and the like, and multiple electrode tab leading-out structures 14' can be gathered, and the gathered electrode tab leading-out structures 14' are electrically connected to anode electrode tabs (for example, forming an electrical connection by welding). Finally, an electrochemical apparatus is successfully prepared.

Correspondingly, the electrochemical apparatus 10 in these embodiments of this application is briefly described further in conjunction with the preparation of the electrode plate of the electrochemical apparatus 10 in these embodiments of this application. It should be understood that this is only for ease of understanding and should not be construed as any limitation on these embodiments.

Referring to FIG. 3A, a preparation process of an electrode plate (taking the electrode plate as the anode electrode plate 1 as an example) of an electrochemical apparatus 10 in an embodiment is shown. Also, FIG. 3B shows an enlarged schematic diagram of position Q in FIG. 3A. In the example shown in FIG. 3A, an active material layer 12 of the anode electrode plate 1 is a coating applied to a body region 111 of a current collector 11. Referring to structure D1 in FIG. 3A, this structure D1 is actually multiple anode electrode plates 1 not further processed (simply put, the structure C1 is cut along the dashed line d1, and then cut along the dashed lines d2 and d3 respectively, thereby separating the structure D1 into 4 anode electrode plates 1, and this process will be specifically described below). After the active material layer 12 is applied to the current collector 11 to obtain the structure D1, the structure D1 is cold pressed (the implementation of cold pressing here can be understood by referring to the related art of using a cold press roller to cold press electrode plates, and details are not described herein). Comparing structure D1 in FIG. 3A and structure C1 in FIG. 2, it can be seen that since the non-coated regions on the edges of structure D1 do not need to be stretched before cold pressing, the width of the non-coated regions on the edges of the current collector 11 in structure D1 in FIG. 3A before die-cutting is significantly smaller in comparison of the structure D1 with the structure C1 in FIG. 2. After the cold pressing step is completed, the cold-pressed structure D1 is cut along the dashed line d1 (for example, laser cutting technology can be used as a cutting method), resulting in two structures D2, and electrode tab connecting sheets 5 are welded to the non-coated regions on the edges of two sides of the structures D2 respectively. After the welding is completed, two structures D3 are obtained (each structure D3 is equivalent to two non die-cut anode electrode plates 1). Next, two sides of the two structures D3 close to the electrode tab connecting sheets 5 are die-cut separately, resulting in two structures D4 (each structure D4 is equivalent to two die-cut anode electrode plates 1). Next, the two structures D4 are cut along the dashed lines d2 and d3 respectively (for example, laser cutting technology can be used as a cutting method), resulting in 4 anode electrode plates 1 as shown in FIG. 3A (additionally, the structure can be further understood by referring to FIG. 3B). In preparing the electrochemical apparatus 10 with the finally obtained anode electrode plate 1, the anode electrode plate 1 can be wound with a separator 3, a cathode electrode plate 2, and the like, multiple die-cut electrode tab connecting sheets 5 can be gathered, and the gathered electrode tab connecting sheets 5 are electrically connected to anode electrode tabs 4 (for example, forming an electrical connection by welding). Finally, the electrochemical apparatus 10 is successfully prepared.

In addition, in these embodiments, since the structure D1 (that is, multiple anode electrode plates 1 not further processed) does not need to be stretched, a step roller is not required for cold pressing, and no step roller with a corresponding size needs to be designed for matching each structure D1 with a different size. Therefore, the service life of the cold press roller is extended, and frequent replacement of the cold press roller is not required, reducing the costs of cold pressing.

The thickness L1 of the electrode tab connecting sheet 5 in this application satisfies: 3 µm ≤ L1 ≤ 35 µm. The reason for using the electrode tab connecting sheet 5 with such a thickness value range is that if the thickness of the electrode tab connecting sheet 5 is too thin, it is difficult to effectively alleviate the problem of folding; and that if the thickness of the electrode tab connecting sheet 5 is too thick, the material costs increase, and during the subsequent preparation of the electrochemical apparatus 10, it is difficult to meet the current welding standards, welding process requirements are strict, and it is difficult to gather and bend the die-cut electrode tab connecting sheets 5, thereby increasing process costs and increasing energy density losses of the electrochemical apparatus 10. With the thickness L1 of the electrode tab connecting sheet 5 in these embodiments satisfying the foregoing value range (that is, 3 µm ≤ L1 ≤ 35 µm), the disadvantages of the thickness of the electrode tab connecting sheet 5 being too small and the disadvantages of the thickness of the electrode tab connecting sheet 5 being too large can be better avoided, thereby meeting the usage needs of the electrochemical apparatus 10 and increasing the preparation yield of the electrochemical apparatus 10.

Optionally, on the basis that 3 µm ≤ L1 ≤ 35 µm, the thickness L1 of the electrode tab connecting sheet 5 satisfies: 8 µm ≤ L1 ≤ 20 µm. Within this preferred value range, no much extra costs are incurred under existing process conditions (that is, without upgrade of the process or device), and the preparation yield of the electrochemical apparatus 10 can be further increased.

Within the foregoing value range, an appropriate value can be selected for the thickness L1 of the electrode tab connecting sheet 5 as desired. For example, taking 8 µm ≤ L1 ≤ 20 µm as an example, the thickness L1 of the electrode tab connecting sheet 5 may be 8 µm, 10 µm, 15 µm, 18 µm, 20 µm, or the like, without specific limitation herein.

Optionally, in practical measurement of the thickness L1 of the electrode tab connecting sheet 5 of the prepared electrochemical apparatus 10, the electrochemical apparatus 10 can be disassembled first, then a non-welded part of the electrode tab connecting sheet 5 between the first welding mark 61 and the second welding mark 62 can be taken and measured using a micrometer or a ten-thousandth micrometer, or can be measured using other methods, without limitation herein.

The electrode tab connecting sheet 5 in this application can be a conductive foil material, and is described in detail below.

The fracture strength S1 of the electrode tab connecting sheet 5 in this application satisfies: 200 MPa ≤ S1 ≤ 880 MPa. The reason for using the electrode tab connecting sheet 5 with such a fracture strength range is that if the fracture strength S1 of the electrode tab connecting sheet 5 is too low, it is difficult to effectively alleviate the problem of folding; and that if the fracture strength S1 of the electrode tab connecting sheet 5 is too high, during the subsequent preparation of the electrochemical apparatus 10, it is difficult to gather and bend the die-cut electrode tab connecting sheets 5, and the current process can hardly meet the requirements, thereby increasing process costs and increasing energy density losses of the electrochemical apparatus 10. With the fracture strength S1 of the electrode tab connecting sheet 5 in these embodiments satisfying the foregoing range (that is, 200 MPa ≤ S1 ≤ 880 MPa), the disadvantages of the fracture strength S1 of the electrode tab connecting sheet 5 being too low and the disadvantages of the fracture strength S1 of the electrode tab connecting sheet 5 being too high can be better avoided, thereby meeting the usage needs of the electrochemical apparatus 10 and increasing the preparation yield of the electrochemical apparatus 10.

Optionally, on the basis that 200 MPa ≤ S1 ≤ 880 MPa, the fracture strength S1 of the electrode tab connecting sheet 5 satisfies: 420 MPa ≤ S1 ≤ 800 MPa. Within this preferred value range, no much extra costs are incurred under existing process conditions, and the preparation yield of the electrochemical apparatus 10 can be further increased.

Within the foregoing value range, an appropriate value can be selected for the fracture strength S1 of the electrode tab connecting sheet 5 as desired. For example, taking 420 MPa ≤ S1 ≤ 800 MPa as an example, the fracture strength S1 of the electrode tab connecting sheet 5 may be 420 MPa, 500 MPa, 600 MPa, 700 MPa, 800 MPa, or the like, without specific limitation herein.

In some optional embodiments, the thickness L2 of the non-coated region 112 satisfies: 2 µm ≤ L2 ≤ 18 µm. A too-thin non-coated region 112 increases the process difficulty of manufacturing the anode electrode plate 1, leads to increased costs, and results in lower strength and difficulty in satisfying the structural strength requirements of the anode electrode plate 1. A too-thick non-coated region 112 increases material costs, making the overall volume of the electrochemical apparatus larger, thereby reducing the energy density gains of the electrochemical apparatus 10, and proposing higher requirements on the welding device and process. With the thickness L2 of the non-coated region 112 in this application satisfying the foregoing value range (that is, 2 µm ≤ L2 ≤ 18 µm), the disadvantages of the non-coated region 112 being too thin and the disadvantages of the non-coated region 112 being too thick can be better avoided, thereby meeting the usage needs of the electrochemical apparatus 10 and increasing the preparation yield of the electrochemical apparatus 10.

Optionally, on the basis that 2 µm ≤ L2 ≤ 18 µm, the thickness L2 of the non-coated region 112 satisfies: 3 µm ≤ L2 ≤ 10 µm. Within this preferred value range, the energy requirements of the electrochemical apparatus can also be met under existing process conditions.

Within the foregoing value range, an appropriate value can be selected for the thickness L2 of the non-coated region 112 as desired. For example, taking 3 µm ≤ L2 ≤ 10 µm as an example, the thickness L2 of the non-coated region 112 may be 3 µm, 4 µm, 5 µm, 6 µm, 7 µm, 8 µm, 9 µm, 10 µm, or the like, without specific limitation herein.

Optionally, in practical measurement of the thickness L2 of the non-coated region 112 of the prepared electrochemical apparatus 10, the electrochemical apparatus 10 can be disassembled first, then the non-welded part of the non-coated region 112 is taken and measured using a micrometer or a ten-thousandth micrometer, or can be measured using other methods, without limitation herein.

The non-coated region 112 in this application can also be a conductive foil material, and is described in detail below.

In some optional embodiments, fracture strength S2 of the non-coated region 112 satisfies: 150 MPa ≤ S2 ≤ 650 MPa. The non-coated region 112 with a too-low fracture strength S2 is prone to breakage during the process of preparation and results in difficulty in meeting the structural strength requirements of the anode electrode plate 1. The non-coated region 112 with a too-high fracture strength S2 increases the process difficulty in manufacturing the anode electrode plate 1 and leads to increased costs. With the fracture strength S2 of the non-coated region 112 in this application satisfying the foregoing value range (that is, 150 MPa ≤ S2 ≤ 650 MPa), the disadvantages of the fracture strength of the non-coated region 112 being too low and the disadvantages of the fracture strength of the non-coated region 112 being too high can be better avoided, thereby meeting the usage needs of the electrochemical apparatus 10 and increasing the preparation yield of the electrochemical apparatus 10.

Optionally, on the basis that 150 MPa ≤ S2 ≤ 650 MPa, the fracture strength S2 of the non-coated region 112 satisfies: 280 MPa ≤ S2 ≤ 550 MPa. Within this preferred value range, the energy requirements of the electrochemical apparatus can also be met under existing process conditions. Within the foregoing value range, an appropriate value can be selected for the fracture strength S2 of the non-coated region 112 as desired. For example, taking 280 MPa ≤ S2 ≤ 550 MPa as an example, the fracture strength S2 of the non-coated region 112 may be 280 MPa, 300 MPa, 350 MPa, 400 MPa, 450 MPa, 500 MPa, 550 MPa, or the like, without specific limitation herein.

In some optional embodiments, the non-coated region 112 can be a conductive foil material, and the resistance R per square millimeter of the conductive foil material (that is, the non-coated region 112) satisfies: R < 20 mΩ. This allows the non-coated region 112 to have good conductivity, meeting the usage needs of the electrochemical apparatus 10.

Optionally, the body region 111 may also be a conductive foil material. For example, the resistance per square millimeter of the conductive foil material of the body region 111 is less than 20 mΩ. This also allows the body region 111 to have good conductivity, meeting the usage needs of the electrochemical apparatus 10.

Optionally, the electrode tab connecting sheet 5 in this application may also be a conductive foil material. Optionally, the resistance R per square millimeter of the electrode tab connecting sheet 5 satisfies: R < 20 mΩ. This allows the electrode tab connecting sheet 5 to have good conductivity, meeting the usage needs of the electrochemical apparatus 10.

Optionally, in practical measurement of the resistance R per square millimeter of the non-coated region 112 or the electrode tab connecting sheet 5 of the prepared electrochemical apparatus 10, the electrochemical apparatus 10 can be disassembled first, then a clean part of the non-coated region 112 or the electrode tab connecting sheet 5 (that is, the part without active material) is taken and measured using a resistance tester. If a clean part cannot be taken, an organic solvent such as alcohol can be used to wash away the active material attached to the non-coated region 112 or the electrode tab connecting sheet 5, then the cleaned part with the active material washed away is taken and measured using a resistance tester, or can be measured using other methods, without limitation herein.

For the case that the non-coated region 112 and/or the electrode tab connecting sheet 5 is a conductive foil material, the specific material of the conductive foil material is not specifically limited in these embodiments. On the basis of ensuring conductivity and structural strength, any material can be used. For example, the conductive foil material includes at least one of a copper foil or a copper-plated foil material. Such conductive foil material can ensure the conductivity of the non-coated region 112 and/or the electrode tab connecting sheet 5 of the anode electrode plate 1, meeting the usage needs of the electrochemical apparatus 10.

The non-coated region 112 and the electrode tab connecting sheet 5 may use a same type of conductive foil material, or they may use different conductive foil materials. For example, in an optional implementation, the non-coated region 112 uses a copper foil, and the electrode tab connecting sheet 5 uses a copper-plated foil; in another optional implementation, the non-coated region 112 uses a copper-plated foil material, and the electrode tab connecting sheet 5 uses a copper foil; in yet another optional implementation, both the non-coated region 112 and the electrode tab connecting sheet 5 use copper foil; and in still another optional implementation, both the non-coated region 112 and the electrode tab connecting sheet 5 use a copper-plated copper foil. In these optional implementations, the thickness L1 of the electrode tab connecting sheet 5 and the thickness L2 of the non-coated region 112 can be the same or different, and the fracture strength S1 of the electrode tab connecting sheet 5 and the fracture strength S2 of the non-coated region 112 can be the same or different. Specifics can be understood by referring to corresponding value range sections in the previous text, and details are not repeated herein.

Optionally, the body region 111 of the current collector 11 of the anode electrode plate 1 can be made of a same material as the non-coated region 112, satisfies the same value ranges as the non-coated region 112 in thickness, and satisfies the same value ranges as the non-coated region 112 in fracture strength. In other words, when being a conductive foil material, the body region 111 can be at least one of a copper foil or a copper-plated foil material; the value range of the thickness of the body region 111 is from 2 µm to 15 µm, preferably from 3 µm to 10 µm; and the value range of the fracture strength of the body region 111 is from 80 MPa to 800 MPa, preferably from 100 MPa to 550 MPa, thereby meeting the corresponding usage needs of the electrochemical apparatus 10.

In these embodiments of this application, the non-coated region 112 is welded to the electrode tab connecting sheet 5. In some optional embodiments, welding tension F between the non-coated region 112 and the electrode tab connecting sheet 5 satisfies: 50 N ≤ F ≤ 1000 N. A too-low welding tension F between the non-coated region 112 and the electrode tab connecting sheet 5 is prone to resulting in falling-off of the electrode tab connecting sheet 5 from the non-coated region 112 during the use of the electrochemical apparatus 10, while a too-high welding tension F between the non-coated region 112 and the electrode tab connecting sheet 5 increases the costs during the preparation of the electrochemical apparatus 10. In these embodiments, with the welding tension F satisfying the foregoing value range (that is, 50 N ≤ F ≤ 1000 N), the disadvantages caused by the welding tension F between the non-coated region 112 and the electrode tab connecting sheet 5 being too low and the disadvantages caused by the welding tension F between the non-coated region 112 and the electrode tab connecting sheet 5 being too large can be better avoided, thereby meeting the usage needs of the electrochemical apparatus 10 and increasing the preparation yield of the electrochemical apparatus 10.

Optionally, on the basis that 50 N ≤ F ≤ 1000 N, the welding tension F between the non-coated region 112 and the electrode tab connecting sheet 5 satisfies: 280 N ≤ F ≤ 500 N. Within this preferred value range, the disadvantages caused by the welding tension between the non-coated region 112 and the electrode tab connecting sheet 5 being too low and the disadvantages caused by the welding tension between the non-coated region 112 and the electrode tab connecting sheet 5 being too large can be better avoided, thereby meeting the usage needs of the electrochemical apparatus 10 and further increasing the preparation yield of the electrochemical apparatus 10.

Within the foregoing value range, an appropriate value can be selected for the welding tension F as desired. For example, taking 280 N ≤ F ≤ 500 N as an example, the welding tension F may be 280 N, 300 N, 350 N, 400 N, 500 N, or the like, without specific limitation herein.

The method for testing the welding tension F can refer to the related art, without limitation herein. For example, a process of an example method for testing the welding tension F can be as follows: taking a sample with the non-coated region 112 and the electrode tab connecting sheet 5 welded together, placing the sample into a tensile testing machine, clamping the non-coated region 112 and the electrode tab connecting sheet 5 respectively with left and right clamps in width direction Z of the electrode plate and a suitable distance between the left and right clamps (for example, 20 mm), arranging the welded region (for example, the first welding mark 61 mentioned below) in the middle of the left and right clamps, keeping the left and right clamps from touching the welded region (for example, the first welding mark 61 mentioned below) during the test, then fixing the left clamp and pulling the right clamp in a direction away from the left clamp at a suitable speed (for example, 1 mm/s), after breakage occurs, checking whether the breakage is in the welded region, and if it is in the welded region, determining a corresponding welding tension F in this case; otherwise, changing the sample for retesting. Of course, this is just an example and not any limitation on these embodiments.

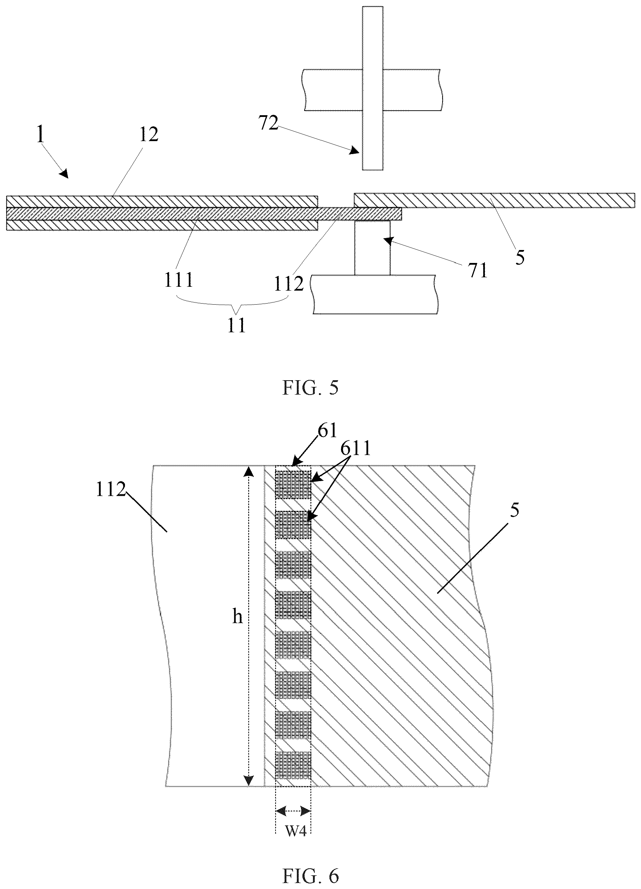

In these embodiments of this application, the welding between the non-coated region 112 and the electrode tab connecting sheet 5 can be performed by any welding method, such as welding by an ultrasonic seam welding method. Referring to FIG. 5, the figure shows a welding method of ultrasonic seam welding, where a non-coated region 112 and an electrode tab connecting sheet 5 are first partially overlapped and placed on a seam welding base 71, then a seam welding head 72 is targeted at the electrode tab connecting sheet 5 and the non-coated region 112 on the seam welding base 71 for ultrasonic welding. During the process of welding, the seam welding head 72 emits high-frequency ultrasonic waves to the electrode tab connecting sheet 5 and the non-coated region 112. Under the condition that the seam welding head 72 applies pressure to the electrode tab connecting sheet 5 and the non-coated region 112, contacting surfaces of the electrode tab connecting sheet 5 and the non-coated region 112 frictionally generate heat energy. The heat energy causes the welding position between the electrode tab connecting sheet 5 and the non-coated region 112 to melt, thereby finally forming a welded connection between the electrode tab connecting sheet 5 and the non-coated region 112. Of course, this is just an example in these embodiments of this application and should not be construed as any limitation on this application.

In some optional embodiments, referring to FIG. 4A, FIG. 4B, and FIG. 4C, in an electrochemical apparatus 10, a first welding mark 61 is formed when a non-coated region 112 and an electrode tab connecting sheet 5 are welded; and in width direction Z of an electrode plate, an active material layer 12 includes a first side away from the non-coated region 112 and a second side close to the non-coated region 112, and the first welding mark 61 includes a first side and a second side, where the first side of the first welding mark 61 is close to the first side of the active material layer 12, and the second side of the first welding mark 61 is away from the first side of the active material layer 12; where the second side of the first welding mark 61 is located on the electrode tab connecting sheet 5.

Specifically, the second side of the first welding mark 61 is located on the electrode tab connecting plate 5, ensuring that the electrode tab connecting sheet 5 can form a stable welded connection with the non-coated region 112.

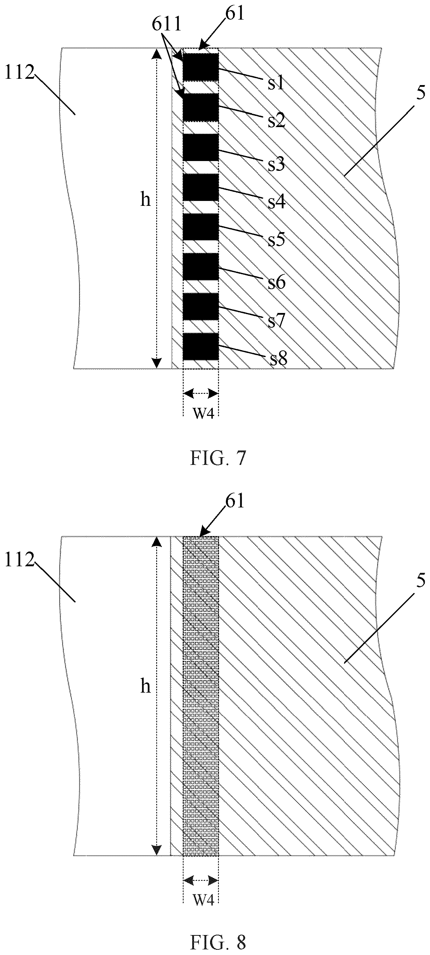

In these embodiments, the shape of the first welding mark 61 is not limited. For example, as shown in FIG. 6 and FIG. 7, the first welding mark 61 may be a combination of multiple sub-welding marks 611, with a distance between every two adjacent sub-welding marks 611. The sub-welding marks 611 may be formed by a combination of multiple small weld spots of regular or irregular shapes. For example, a shape of the small weld spot may be circular, rectangular, another polygonal shape, or the like. Optionally, a shape of the sub-welding marks 611 formed by the arrangement of the small weld spots may be a parallelogram, a rectangle (which can be a square), a triangle, other polygon, or another irregular shape. For example, as shown in FIG. 6, the figure shows that the shape of the sub-welding mark 611 is a rectangular shape composed of small weld spots, and the small weld spots are rectangular. Or, for example, as shown in FIG. 7, each sub-welding mark 611 may be a complete welding mark. No limitation is imposed herein.

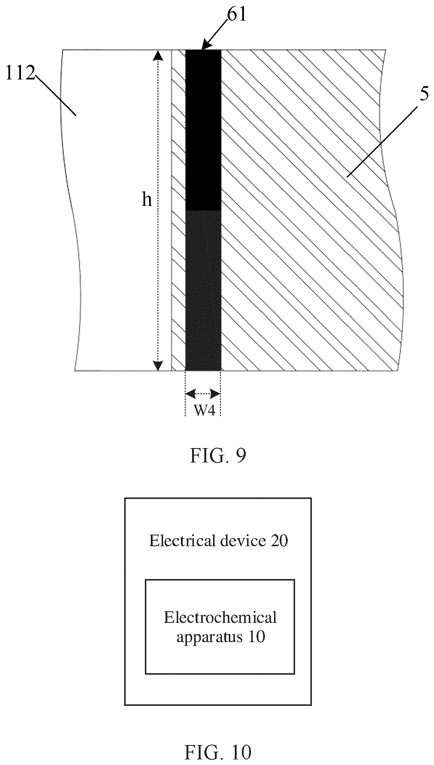

Or, for another example, as shown in FIG. 8 and FIG. 9, the first welding mark 61 may alternatively be a continuous welding mark. The continuous welding mark may be a complete welding mark (the complete welding mark can be understood in conjunction with FIG. 9, and details are not repeated herein). Or, the continuous welding mark may alternatively be formed by a combination of multiple small weld spots of regular or irregular shapes. For example, a shape of the small weld spot may be circular, rectangular, another polygonal shape, or the like (which can be understood in conjunction with FIG. 8, and details are not repeated herein). This is not limited in these embodiments.

Optionally, in this embodiment, for the case of "the first welding mark 61 is a combination of multiple sub-welding marks 611, with a distance between every two adjacent sub-welding marks 611", a welding mark area ratio P is greater than 20%, where the welding mark area ratio P = Sy/Sz, where Sy is a sum of areas of all sub-welding marks 611 of the first welding mark 61, and Sz is a total area of the welding region (that is, the sum of areas of all sub-welding marks 611 plus a sum of areas of distances between all sub-welding marks 611).

Specifically, the case of the sub-welding marks 611 being complete welding marks in FIG. 7 can be referred to understand Sy and Sz, where Sz = h * W4, Sy = s1 + s2 + s3 + s4 + s5 + s6 + s7 + s8, s1, s2, s3, s4, s5, s6, s7, s8 are the areas of individual sub-welding marks, and the welding mark area ratio P = Sy/Sz = (s1 + s2 + s3 + s4 + s5 + s6 + s7 + s8) / (h * W4) > 20%. Moreover, as will be introduced below, W4 is the width of the first welding mark 61.

Similarly, for each sub-welding mark 611 in FIG. 6, which can be formed by a combination of multiple small weld spots of regular or irregular shapes, Sz = h * W4, and Sy is equal to the sum of areas of all small weld spots. This can still be understood by referring to the explanation of FIG. 7, and details are not repeated herein.

Of course, in other embodiments, on the basis of meeting the needs of the electrochemical apparatus 10, the welding mark area ratio P may alternatively be less than 20%, and no special limitation is imposed herein.

In some optional embodiments, referring to FIG. 4A, FIG. 4B, and FIG. 4C, in the width direction Z of the electrode plate, the width W4 of the first welding mark 61 satisfies: 0.1 mm ≤ W4 ≤ 10 mm.

The width W4 of the first welding mark 61 is a distance between the first side and the second side of the first welding mark 61 in the width direction Z of the electrode plate. The width of the first welding mark 61 (that is, W4) can also be understood with reference to FIG. 6, FIG. 7, FIG. 8, and FIG. 9.

When the width of the first welding mark 61 is too small (that is, W4 < 0.1 mm), it is difficult to ensure that the welding tension between the non-coated region 112 and the electrode tab connecting sheet 5 meets the requirements, leading to the foregoing disadvantage of insufficient welding tension F. When the width of the first welding mark 61 is too large (that is, W4 > 10 mm), after the non-coated regions 112 and the electrode tab connecting sheets 5 of the anode electrode plate 1 are die cut, it is difficult to gather the die-cut electrode tab connecting sheets 5, additionally increasing costs. With the width W4 of the first welding mark 61 in these embodiments satisfying the foregoing value range (0.1 mm ≤ W4 ≤ 10 mm), the disadvantages of the width of the first welding mark 61 being too small and the disadvantages of the width of the first welding mark 61 being too large can be avoided, thereby meeting the usage needs of the electrochemical apparatus 10 and increasing the preparation yield of the electrochemical apparatus 10.

Within the foregoing value range, an appropriate value can be selected for the width W4 of the first welding mark 61 as desired. For example, taking 0.1 mm ≤ W4 ≤ 10 mm as an example, W4 may be 0.1 mm, 1 mm, 3 mm, 5 mm, 8 mm, 10 mm, or the like, without specific limitation herein.

In some optional embodiments, referring to FIG. 4A, FIG. 4B, and FIG. 4C, in the width direction Z of the electrode plate, the electrode tab connecting sheet 5 includes a first side and a second side, where the first side of the electrode tab connecting sheet 5 is close to the first side of the active material layer 12, and the second side of the electrode tab connecting sheet 5 is away from the first side of the active material layer 12. Under the condition that the first side of the first welding mark 61 is located on the non-coated region 112, distance W5 between the first side of the first welding mark 61 and the first side of the electrode tab connecting sheet 5 satisfies: 0 mm ≤ W5 ≤ 5 mm; or, under the condition that the first side of the first welding mark 61 is located on the electrode tab connecting sheet 5, the distance W5 between the first side of the first welding mark 61 and the first side of the electrode tab connecting sheet 5 satisfies: 0 mm ≤ W5 ≤ 25 mm.

Specifically, referring to FIG. 4B, the figure shows an example where the first side of the first welding mark 61 is located on the non-coated region 112 (it should be noted that although the first side of the first welding mark 61 in FIG. 4B is not in contact with and is spaced apart from the non-coated region 112, the actual style expressed in FIG. 4B is that the first side of the first welding mark 61 directly contacts the non-coated region 112 to be located on the non-coated region 112, so that a weld is formed between the electrode tab connecting sheet 5 and the non-coated region 112. This is shown for the convenience of illustrating the structure and is not intended to limit this application). The first side of the first welding mark 61 being located on the non-coated region 112 means that the first side of the first welding mark 61 extends beyond the first side of the electrode tab connecting sheet 5 along the direction opposite to the width direction Z of the electrode plate, the first welding mark 61 covers the first side of the electrode tab connecting sheet 5. Referring to FIG. 4A and FIG. 4C, the figures show an example where the first side of the first welding mark 61 is located on the non-coated region 112. The first side of the first welding mark 61 being located on the electrode tab connecting sheet 5 means that the first side of the first welding mark 61 extends beyond the first side of the electrode tab connecting sheet 5 along the width direction Z of the electrode tab, and the first side of the electrode tab connecting sheet 5 is not covered by the first welding mark 61. The first side of the electrode tab connecting sheet 5 can be in an unrestrained state, that is, no weld is formed between the first side of the electrode tab connecting sheet 5 and the non-coated region 112.

When the first side of the first welding mark 61 extends too much beyond the first side of the electrode tab connecting sheet 5 along the direction opposite to the width direction of the electrode plate (for example, when the first side of the first welding mark 61 is located on the second part 112 and W5 > 5 mm), portions without anode active material occupy a large area so that the space proportion of the portions not capable of providing energy is large accordingly. This results in severe energy density loss, making it difficult to gather the die-cut electrode tab connecting sheets 5 and subsequently affecting the welding of the anode electrode tab 4 and the electrode tab connecting sheet 5. In the process, it is also likely to damage the electrode tab connecting sheet 5, ultimately compromising the electrical performance of the prepared electrochemical apparatus 10. When the first side of the first welding mark 61 extends too much beyond the first side of the electrode tab connecting sheet 5 along the width direction Z of the electrode plate (for example, when the first side of the first welding mark is located on the electrode tab connecting sheet 5 and W5 > 25 mm), the electrode tab connecting sheet 5 is too wide in an unrestrained state, affecting die-cutting during the preparation of the anode electrode plate 1, increasing process difficulty, and compromising the preparation yield of the electrochemical apparatus 10.

In these embodiments of this application, with the use of such a value range of W5, the disadvantages caused by the first side of the first welding mark 61 extending too much beyond the first side of the electrode tab connecting sheet 5 along the direction opposite to the width direction of the electrode tab and the disadvantages caused by the first side of the first welding mark 61 extending too much beyond the first side of the electrode tab connecting sheet 5 along the width direction of the electrode tab can be avoided, thereby meeting the usage needs of the electrochemical apparatus 10 and increasing the preparation yield of the electrochemical apparatus 10.

Optionally, on the basis of the foregoing value range, under the condition that the first side of the first welding mark 61 is located on the non-coated region 112, the distance W5 between the first side of the first welding mark 61 and the first side of the electrode tab connecting sheet 5 satisfies: 0 mm ≤ W5 ≤ 3 mm; or, under the condition that the first side of the first welding mark 61 is located on the tab connecting sheet 5, the distance W5 between the first side of the first welding mark 61 and the first side of the tab connecting sheet 5 satisfies: 0 mm ≤ W5 ≤ 10 mm. Within this preferred value range, the disadvantages caused by the first side of the first welding mark 61 extending too much beyond the first side of the electrode tab connecting sheet 5 along the direction opposite to the width direction of the electrode tab and the disadvantages caused by the first side of the first welding mark 61 extending too much beyond the first side of the electrode tab connecting sheet 5 along the width direction of the electrode tab can be better avoided, thereby further meeting the usage needs of the electrochemical apparatus 10 and further increasing the preparation yield of the electrochemical apparatus 10.

Within the foregoing value range, an appropriate value can be selected for W5 as desired. For example, taking 0 mm ≤ W5 ≤ 3 mm as an example when the first side of the first welding mark 61 is located on the non-coated region 112, W5 may be 0 mm, 0.5 mm, 1 mm, 1.5 mm, 2 mm, 2.5 mm, 3 mm, or the like, without specific limitation herein. For example, taking 0 mm ≤ W5 ≤ 10 mm as an example, when the first side of the first welding mark 61 is located on the electrode tab connecting sheet 5, W5 may be 0 mm, 1 mm, 3 mm, 5 mm, 7 mm, 8 mm, 10 mm, or the like, without specific limitation herein.

In some optional embodiments, referring to FIG. 4A, FIG. 4B, and FIG. 4C, in the width direction Z of the electrode plate, the non-coated region 112 includes a first side and a second side, where the first side of the non-coated region 112 is close to the first side of the active material layer 12, and the second side of the non-coated region 112 is away from the first side of the active material layer 12. Under the condition that an overlap is preset between a first projection of the second side of the first welding mark 61 on the electrode tab connecting sheet 5 and a second projection of the non-coated region 112 on the electrode tab connecting sheet 5, distance W6 between the second side of the first welding mark 61 and the second side of the non-coated region 112 satisfies: 0 mm ≤ W6 ≤ 15 mm; or, under the condition that no overlap is present between a first projection of the second side of the first welding mark 61 on the electrode tab connecting sheet 5 and a second projection of the non-coated region 112 on the electrode tab connecting sheet 5, the distance W6 between the second side of the first welding mark 61 and the second side of the non-coated region 112 satisfies: 0 mm ≤ W6 ≤ 7 mm.

It can be easily understood that the first projection may be a projection of the second side of the first welding mark 61 on the electrode tab connecting sheet 5 along the thickness direction of the electrode tab connecting sheet 5, and the second projection may be a projection of the non-coated region 112 on the electrode tab connecting sheet 5 along the thickness direction of the electrode tab connecting sheet 5.

Specifically, referring to FIG. 4B and FIG. 4C, an overlap present between the first projection and the second projection means that the second side of the non-coated region 112 extends beyond the second side of the first welding mark 61 along the width direction Z of the electrode plate and that the second side of the non-coated region 112 is in an unrestrained state, that is, no weld is formed between the second side of the non-coated region 112 and the electrode tab connecting sheet 5. Referring to FIG. 4A, no overlap present between the first projection and the second projection means that the second side of the non-coated region 112 does not extend beyond the second side of the first welding mark 61 along the width direction Z of the electrode plate and that a weld is formed between the second side of the non-coated region 112 and the electrode tab connecting sheet 5.

When an overlap is present between the first projection and the second projection, if the distance W6 between the second side of the first welding mark 61 and the second side of the non-coated region 112 is too large (for example, when an overlap is present between the first projection and the second projection and W6 > 15 mm), meaning that the second side of the non-coated region 112 extends too much beyond the second side of the first welding mark 61 along the width direction Z of the electrode plate, the non-coated region 112 is too wide in an unrestrained state, affecting die-cutting during the preparation of the anode electrode plate 1, increasing process difficulty, and compromising the preparation yield of the electrochemical apparatus 10. When no overlap is present between the first projection and the second projection, if the distance W6 between the second side of the first welding mark 61 and the second side of the non-coated region 112 is too large (for example, when here is no overlap between the first projection and the second projection and W6 > 7 mm), meaning that the second side of the first welding mark 61 extends too much beyond the second side of the non-coated region 112 along the width direction Z of the electrode plate, this results in severe energy density loss, subsequently affecting the electrical connection between the anode electrode tab 4 and the electrode tab connecting sheet 5 (for example, the anode electrode tab 4 is electrically connected to the electrode tab connecting sheet 5 by welding) and making it difficult to gather the die-cut electrode tab connecting sheets 5. In the process, it is also likely to damage the electrode tab connecting sheet 5, ultimately compromising the electrical performance of the prepared electrochemical apparatus 10.

In these embodiments of this application, with the use of such a value range of W6, the disadvantages caused by the second side of the non-coated region 112 extending too much beyond the second side of the first welding mark 61 along the width direction of the electrode plate and the disadvantages caused by the second side of the first welding mark 61 extending too much beyond the second side of the non-coated region 112 along the width direction of the electrode plate can be avoided, thereby meeting the usage needs of the electrochemical apparatus 10 and increasing the preparation yield of the electrochemical apparatus 10.

Optionally, on the basis of the foregoing value range, under the condition that an overlap is preset between a first projection of the second side of the first welding mark 61 on the electrode tab connecting sheet 5 and a second projection of the non-coated region 112 on the electrode tab connecting sheet 5, distance W6 between the second side of the first welding mark 61 and the second side of the non-coated region 112 satisfies: 0 mm ≤ W6 ≤ 10 mm; or, under the condition that no overlap is present between a first projection of the second side of the first welding mark 61 on the electrode tab connecting sheet 5 and a second projection of the non-coated region 112 on the electrode tab connecting sheet 5, the distance W6 between the second side of the first welding mark 61 and the second side of the non-coated region 112 satisfies: 0 mm ≤ W6 ≤ 3 mm. Within this preferred value range, the disadvantages caused by the second side of the non-coated region 112 extending too much beyond the second side of the first welding mark 61 along the width direction of the electrode plate and the disadvantages caused by the second side of the first welding mark 61 extending too much beyond the second side of the non-coated region 112 along the width direction of the electrode plate can be better avoided, thereby meeting the usage needs of the electrochemical apparatus 10 and increasing the preparation yield of the electrochemical apparatus 10.

Within the foregoing value range, an appropriate value can be selected for W6 as desired. For example, taking 0 mm ≤ W6 ≤ 10 mm as an example when an overlap is present between the first projection and the second projection, W6 may be 0 mm, 1 mm, 3 mm, 5 mm, 8 mm, 9 mm, 10 mm, or the like, without specific limitation herein. For example, taking 0 mm ≤ W6 ≤ 3 mm as an example when no overlap is present between the first projection and the second projection, W6 may be 0 mm, 0.5 mm, 1 mm, 1.5 mm, 2 mm, 2.5 mm, 3 mm, or the like, without specific limitation herein.

In some optional embodiments, referring to FIG. 4A, FIG. 4B, and FIG. 4C, the electrochemical apparatus 10 further includes an anode electrode tab 4; an electrical connection is formed between the anode electrode tab 4 and the electrode tab connecting sheet 5 through welding, and a second welding mark 62 is formed on the electrode tab connecting sheet 5; and in the width direction Z of the electrode plate, the second welding mark 62 includes a first side and a second side, where the first side of the second welding mark 62 is close to the first side of the active material layer 12, and the second side of the second welding mark 62 is away from the first side of the active material layer 12; where distance W7 between the second side of the first welding mark 61 and the first side of the second welding mark 62 satisfies: 0 mm < W7 ≤ 10 mm.

The specific welding process used when a weld is formed between the anode electrode tab 4 and the electrode tab connecting sheet 5 is not limited in this application. For example, the welding process can be tab welding, then the second welding mark 62 can be a tab welding mark.

When the anode electrode tab 4 is electrically connected to the electrode tab connecting sheet 5 by welding, the second welding mark 62 formed on the electrode tab connecting sheet 5 cannot overlap with the first welding mark 61. Overlapping will compromise the welding effect between the anode electrode tab 4 and the electrode tab connecting sheet 5, reducing the welding tension between the two. Under the condition that the distance W7 between the second side of the first welding mark 61 and the first side of the second welding mark 62 is too large (for example, W7 > 10 mm), the energy density of the electrochemical apparatus 10 is likely to be compromised. In these embodiments, with the use of such a value range of W7, the disadvantages caused by an overlap between the first welding mark 61 and the second welding mark 62 and the disadvantages caused by the distance W7 between the second side of the first welding mark 61 and the first side of the second welding mark 62 being too large can be avoided, thereby meeting the usage needs of the electrochemical apparatus 10 and increasing the preparation yield of the electrochemical apparatus 10.

Within the foregoing value range, an appropriate value can also be selected for W7 as desired. For example, taking 0 mm < W7 ≤ 10 mm as an example, W7 may be 1 mm, 3 mm, 5 mm, 7 mm, 9 mm, 10 mm, or the like, without specific limitation herein.

In these embodiments, the width of the electrode tab connecting sheet 5 is not limited (referring to FIG. 4A, FIG. 4B, and FIG. 4C, width W1 of the electrode tab connecting sheet 5 is a distance between the first side and the second side of the electrode tab connecting sheet 5 along the width direction Z of the electrode plate), provided that the needs of the electrochemical apparatus 10 are met. In some optional embodiments, in the width direction Z of electrode plate, the active material layer 12 includes a first side away from the non-coated region 112 and a second side close to the non-coated region 112, the electrode tab connecting sheet 5 includes a first side and a second side, and the non-coated region 112 includes a first side and a second side, where the first side of the electrode tab connecting sheet 5 is close to the first side of the active material layer 12, and the second side of the electrode tab connecting sheet 5 is away from the first side of the active material layer 12. The width W1 of the electrode tab connecting sheet 5 satisfies: 3 mm ≤ W1 ≤ 35 mm.

When the width of the electrode tab connecting sheet 5 is too small, it is difficult to weld the electrode tab connecting sheet 5 to the non-coated region 112 during the preparation of the electrochemical apparatus 10. When the width of the electrode tab connecting sheet 5 is too large, during the preparation of the anode electrode plate 1, the edge of the electrode tab connecting sheet 5 is prone to collapse during die-cutting, affecting the die-cutting precision. Especially in using laser cutting for die-cutting operations, severe deviation of the laser focus from the cutting surface can lead to incomplete cutting and potentially lead to accidental breakage of the electrode tab connecting sheet 5. With the width of the electrode tab connecting sheet 5 in these embodiments satisfying the foregoing value range (that is, 3 mm ≤ W1 ≤ 35 mm), the disadvantages of the width of the electrode tab connecting sheet 5 being too small and the disadvantages of the width of the electrode tab connecting sheet 5 being too large can be better avoided, thereby meeting the usage needs of the electrochemical apparatus 10 and increasing the preparation yield of the electrochemical apparatus 10.

Optionally, on the basis that 3 mm ≤ W1 ≤ 35 mm, the width W1 of the electrode tab connecting sheet 5 satisfies: 5 mm ≤ W1 ≤ 25 mm. Within this preferred value range, the disadvantages of the width of the electrode tab connecting sheet 5 being too small and the disadvantages of the width of the electrode tab connecting sheet 5 being too large can be better avoided, thereby meeting the usage needs of the electrochemical apparatus 10 and further increasing the preparation yield of the electrochemical apparatus 10.

Within the foregoing value range, an appropriate value can be selected for the width W1 of the electrode tab connecting sheet 5 as desired. For example, taking 5 mm ≤ W1 ≤ 25 mm as an example, W1 may be 5 mm, 10 mm, 15 mm, 18 mm, 20 mm, 23 mm, 25 mm, or the like, without specific limitation herein.

In these embodiments of this application, the width of the non-coated region 112 of the current collector 11 is not limited (referring to FIG. 4A, FIG. 4B, and FIG. 4C, width W2 of the non-coated region 112 is a distance between the first side and the second side of the non-coated region 112 along the width direction Z of the electrode plate), provided that the needs of the electrochemical apparatus 10 are met. In some optional embodiments, in the width direction Z of electrode plate, the active material layer 12 includes a first side away from the non-coated region 112 and a second side close to the non-coated region 112, the electrode tab connecting sheet 5 includes a first side and a second side, and the non-coated region 112 includes a first side and a second side, where the first side of the non-coated region 112 is close to the first side of the active material layer 12, and the second side of the non-coated region 112 is away from the first side of the active material layer 12. The width W2 of the non-coated region 112 satisfies: 0.5 mm ≤ W2 ≤ 15 mm.

When the width of the non-coated region 112 is too small, it is difficult to ensure the welding width during the preparation of the electrochemical apparatus 10, making it difficult to weld the electrode tab connecting sheet 5 to the non-coated region 112. When the width of the non-coated region 112 is too large, the non-coated region 112 is more prone to wrinkling after cold pressing during the preparation of the anode electrode plate 1, making it difficult to gathering the die-cut electrode tab connecting sheets 5 welded to the non-coated regions 112, and this is likely to increase energy density losses and leads to increased costs. With the width of the non-coated region 112 in these embodiments satisfying the foregoing value range (that is, 0.5 mm ≤ W2 ≤ 15 mm), the disadvantages of the width of the non-coated region 112 being too small and the disadvantages of the width of the non-coated region 112 being too large can be better avoided, thereby meeting the usage needs of the electrochemical apparatus 10 and increasing the preparation yield of the electrochemical apparatus 10.

Optionally, on the basis that 0.5 mm ≤ W2 ≤ 15 mm, the Width W2 of the non-coated region 112 satisfies: 1 mm ≤ W2 ≤ 10 mm. Within this preferred value range, the disadvantages of the width of the non-coated region 112 being too small and the disadvantages of the width of the non-coated region 112 being too large can be better avoided, thereby meeting the usage needs of the electrochemical apparatus 10 and further increasing the preparation yield of the electrochemical apparatus 10.

Within the foregoing value range, an appropriate value can be selected for the width (that is, W2) of the non-coated region 112 as desired. For example, taking 1 mm ≤ W2 ≤ 10 mm as an example, W2 may be 1 mm, 3 mm, 4 mm, 5 mm, 7 mm, 8 mm, 10 mm, or the like, without specific limitation herein.

In some optional embodiments, the width W1 of the electrode tab connecting sheet 5 and the width W2 of the non-coated region 112 satisfy: W1 ≥ W2. Of course, in other embodiments, W1 < W2 is also possible, and no limitation is imposed herein in this application.

In some optional embodiments, referring to FIG. 4A, FIG. 4B, and FIG. 4C, in the width direction Z of the electrode plate, the active material layer 12 includes a first side away from the non-coated region 112 and a second side close to the non-coated region 112, and the electrode tab connecting sheet 5 includes a first side and a second side, where the first side of the electrode tab connecting sheet 5 is close to the first side of the active material layer 12, and the second side of the electrode tab connecting sheet 5 is away from the first side of the active material layer 12. In these embodiments, under the condition that the first side of the electrode tab connecting sheet 5 is located on the active material layer 12, distance W3 between the first side of the electrode tab connecting sheet 5 and the second side of the active material layer 11 satisfies: 0 mm ≤ W3 ≤ 8 mm; or, under the condition that the first side of the electrode tab connecting sheet 5 is located on the non-coated region 112, the distance W3 between the first side of the electrode tab connecting sheet 5 and the second side of the active material layer 112 satisfies: 0 mm ≤ W3 ≤ 10 mm.

Specifically, the width of the active material layer 12 is the same as the width of the body region 111 of the current collector, and the first side of the electrode tab connecting sheet 5 may be located on the active material layer 12. This is because, in general, the width of the active material layer 12 of the anode electrode plate 1 is larger than the width of the cathode active material layer of the cathode electrode plate 2. Therefore, even if the electrode tab connecting sheet 5 is located on the active material layer 12, as long as the electrode tab connecting sheet 5 does not contact the cathode active material layer of the cathode electrode plate 2 after the anode electrode plate 1 and the cathode electrode plate 2 are wound, the electrode tab connecting sheet 5 will not obstruct ion transport, thereby meeting the usage needs of the electrochemical apparatus 10.

Specifically, referring to FIG. 4C, the first side of the electrode tab connecting sheet 5 being located on the active material layer 12 means that after the electrode tab connecting sheet 5 is welded to the non-coated region 112, a first end of the electrode tab connecting sheet 5 extends beyond the first side of the non-coated region 112 along a direction opposite to the width direction Z of the electrode plate. The first end extending too much (for example, W3 > 8 mm) is likely to cause the thickness of the prepared electrochemical apparatus 10 to be too large. Referring to FIG. 4A and FIG. 4B, when the first side of the electrode tab connecting sheet 5 is located on the non-coated region 112 and the distance W3 between the first side of the electrode tab connecting sheet 5 and the second side of the active material layer 12 is too large (for example, W3 > 10 mm), the problem that the non-coated region 112 is prone to folding after the non-coated region 112 and the electrode tab connecting sheet 5 are welded cannot be effectively alleviated.

With W3 in this application satisfying the foregoing value range, the disadvantages of the first end of the electrode tab connecting sheet 5 extending too much beyond the first side of the non-coated region 112 along the direction opposite to the width direction Z of the electrode plate and the disadvantages caused by a too-large W3 when the first side of the electrode tab connecting sheet 5 is located on the non-coated region 112 can be better avoided, thereby meeting the usage needs of the electrochemical apparatus 10 and increasing the preparation yield of the electrochemical apparatus 10.

A more preferred implementation is when there is a distance between the first side of the electrode tab connecting sheet 5 and the active material layer 12 (that is, when the first side of the electrode tab connecting sheet 5 is located on the non-coated region 112). Optionally, when the first side of the electrode tab connecting sheet 5 is located on the non-coated region 112, the distance W3 between the first side of the electrode tab connecting sheet 5 and the second side of the active material layer 12 satisfies: 0 mm ≤ W3 ≤ 5 mm. Within this preferred value range, the disadvantages caused by a too-large W3 when he first side of the electrode tab connecting sheet 5 is located on the non-coated region 112 can be better avoided, thereby meeting the usage needs of the electrochemical apparatus 10 and further increasing the preparation yield of the electrochemical apparatus 10.

It can be understood that the content above is only for some optional examples of the electrochemical apparatus 10 in some embodiments of this application, but is not intended to be any limitation on the electrochemical apparatus 10 in these embodiments of this application.

In summary, some embodiments of this application provide the electrochemical apparatus and the electrical device. In these embodiments of this application, the non-coated region of the current collector of the electrode plate of the electrochemical apparatus is electrically connected to the electrode tab connecting sheet. Therefore, in these embodiments of this application, in leading out the electrode tab from the non-coated region of the current collector (that is, a blank region extending on the edge of the current collector), the electrode tab is no longer electrically connected directly on the non-coated region but is electrically connected via the electrode tab connecting sheet welded to the non-coated region. This allows the non-coated region of the electrode plate to not be stretched before cold pressing of the electrode plate during the preparation of the electrode plate of the electrochemical apparatus, and the problem of wrinkling of the electrode plate to be alleviated during subsequent cold pressing of the electrode plate. In these embodiments, the thickness L1 of the electrode tab connecting sheet satisfies: 3 µm ≤ L1 ≤ 35 µm, and/or the fracture strength S1 of the electrode tab connecting sheet satisfies: 200 MPa ≤ S1 ≤ 880 MPa, and the electrode tab connecting sheet welded to the non-coated region acts as an extension of the non-coated region. Compared to the non-coated region alone, the welded non-coated region and the electrode tab connecting sheet can better fit the surface of the cold press roller when passing through the roller, and the welded non-coated region and the electrode tab connecting sheet are less likely to deform, thereby alleviating the problem that the non-coated region is prone to folding and thus increasing the preparation yield of the electrochemical apparatus.

According to another aspect of some embodiments of this application, referring to the structural block diagram of FIG. 10, an embodiment of this application provides an electrical device 20. The electrical device 20 includes the electrochemical apparatus 10 in any one embodiment of the first aspect.

Specifically, the electrochemical apparatus 10 can be used to supply power to individual electrical components in the electrical device 20.

Because the electrical device 20 in these embodiments of this application includes the electrochemical apparatus 10, the electrochemical apparatus 10 has a high preparation yield, and the electrical device 20 also has a high preparation yield.

The following descriptions are made in conjunction with some actual examples of the electrochemical apparatus 10 in some examples of this application and some comparative examples of electrochemical apparatuses in the related art. With reference to comparisons between these examples and comparative examples, the beneficial effects of the electrochemical apparatus 10 in these examples of this application in relation to the related art can become more apparent. In these comparative examples and examples, the electrochemical apparatus exemplified by a lithium-ion battery.

The relevant data is listed in Table 1. In Table 1, the electrochemical apparatuses in Comparative examples 1 and 2 have a conventional wound structure. In addition, as compared to Comparative examples 1 to 3, in Examples 1 to 34, the non-coated regions on the edges of the current collector were not stretched before cold pressing during the preparation of the anode electrode plate, the electrode tab connecting sheets were welded to the non-coated regions on the edges of the current collector (that is, the non-coated regions 112), and the step roller was canceled during the cold pressing, with other parameters being the same.

**Table 1**

| No. | L1 (µm) | S1 (MPa) | L2 (µm) | S2 (MPa) | W1 (mm) | W2 (mm) | W3 (mm) | W4 (mm) | W5 (mm) | W7 (mm) | Welding tension (F/N) | Proportion of electrode tab folding |
|---|---|---|---|---|---|---|---|---|---|---|---|---|
| Comparative example 1 | \ | \ | 8 | 420 | \ | \ | \ | \ | \ | \ | \ | 2.50% |
| Comparative example 2 | \ | \ | 8 | 420 | \ | \ | \ | \ | \ | \ | \ | 2% |
| Example 1 | 8 | 420 | 5 | 330 | 10 | 5 | 2 | 3 | 0 | 5 | 315 | 0 |
| Example 2 | 8 | 420 | 5 | 330 | 10 | 1 | 2 | 3 | 0 | 5 | 300 | 0.01% |
| Example 3 | 8 | 420 | 5 | 330 | 10 | 10 | 2 | 3 | 0 | 5 | 316 | 0.05% |
| Example 4 | 8 | 420 | 5 | 330 | 10 | 20 | 2 | 3 | 0 | 5 | 297 | 0.1 % |
| Example 5 | 8 | 420 | 5 | 330 | 10 | 5 | -2 | 3 | 0 | 5 | 333 | 0.01% |
| Example 6 | 8 | 420 | 5 | 330 | 10 | 5 | 5 | 3 | 0 | 5 | 313 | 0.02% |
| Example 7 | 8 | 420 | 5 | 330 | 10 | 5 | 10 | 3 | 0 | 5 | 289 | 0.05% |
| Example 8 | 8 | 420 | 5 | 330 | 5 | 5 | 2 | 3 | 0 | 5 | 293 | 0 |
| Example 9 | 8 | 420 | 5 | 330 | 25 | 5 | 2 | 3 | 0 | 5 | 321 | 0.40% |
| Example 10 | 8 | 420 | 5 | 330 | 10 | 5 | 2 | 3 | -3 | 5 | 322 | 0 |
| Example 11 | 8 | 420 | 5 | 330 | 10 | 5 | 2 | 3 | 5 | 5 | 289 | 0.01% |
| Example 12 | 8 | 420 | 5 | 330 | 10 | 5 | 2 | 3 | 20 | 5 | 295 | 0.50% |
| Example 13 | 8 | 420 | 5 | 330 | 10 | 5 | 2 | 0.2 | 0 | 5 | 50 | 0.50% |
| Example 14 | 8 | 420 | 5 | 330 | 10 | 5 | 2 | 10 | 0 | 5 | 1000 | 0 |
| Example 15 | 8 | 420 | 5 | 330 | 10 | 5 | 2 | 3 | 0 | 0 | 308 | 0 |
| Example 16 | 8 | 420 | 5 | 330 | 10 | 5 | 2 | 3 | 0 | 10 | 390 | 0.01% |
| Example 17 | 8 | 420 | 3 | 220 | 10 | 5 | 2 | 3 | 0 | 5 | 318 | 0 |
| Example 18 | 8 | 420 | 8 | 420 | 10 | 5 | 2 | 3 | 0 | 5 | 323 | 0 |
| Example 19 | 3 | 200 | 5 | 330 | 10 | 5 | 2 | 3 | 0 | 5 | 280 | 0.05% |
| Example 20 | 5 | 330 | 5 | 330 | 10 | 5 | 2 | 3 | 0 | 5 | 317 | 0.03% |
| Example 21 | 12 | 500 | 5 | 330 | 10 | 5 | 2 | 3 | 0 | 5 | 320 | 0 |
| Example 22 | 16 | 630 | 5 | 330 | 10 | 5 | 2 | 3 | 0 | 5 | 410 | 0 |
| Example 23 | 20 | 710 | 5 | 330 | 10 | 5 | 2 | 3 | 0 | 5 | 433 | 0 |
| Example 24 | 25 | 780 | 5 | 330 | 10 | 5 | 2 | 3 | 0 | 5 | 479 | 0 |
| Example 25 | 30 | 800 | 5 | 330 | 10 | 5 | 2 | 3 | 0 | 5 | 523 | 0 |
| Example 26 | 35 | 880 | 5 | 330 | 10 | 5 | 2 | 3 | 0 | 5 | 613 | 0 |
| Example 27 | 8 | 420 | 2 | 150 | 10 | 5 | 2 | 3 | 0 | 5 | 280 | 0.03% |
| Example 28 | 8 | 420 | 3 | 200 | 10 | 5 | 2 | 3 | 0 | 5 | 310 | 0.02% |
| Example 29 | 8 | 420 | 5 | 330 | 10 | 5 | 2 | 3 | 0 | 5 | 321 | 0.01% |
| Example 30 | 8 | 420 | 8 | 420 | 10 | 5 | 2 | 3 | 0 | 5 | 329 | 0 |
| Example 31 | 8 | 420 | 10 | 430 | 10 | 5 | 2 | 3 | 0 | 5 | 368 | 0 |
| Example 32 | 8 | 420 | 13 | 550 | 10 | 5 | 2 | 3 | 0 | 5 | 377 | 0 |
| Example 33 | 8 | 420 | 15 | 600 | 10 | 5 | 2 | 3 | 0 | 5 | 389 | 0 |
| Example 34 | 8 | 420 | 18 | 650 | 10 | 5 | 2 | 3 | 0 | 5 | 437 | 0 |

It should be noted that for ease of viewing in Table 1, in column W3, a negative number indicates a situation in which the first side of the electrode tab connecting sheet 5 is located on the active material layer 12 (for example, W3 = -2 mm in Table 1 means that the first side of the electrode tab connecting sheet 5 is located on the active material layer 12, W3 = 2 mm), while a positive number indicates a situation in which the first side of the electrode tab connecting sheet 5 is located on the non-coated region 112 (for example, W3 = 2 mm in Table 1 means that the first side of the electrode tab connecting sheet 5 is located on the non-coated region 112, W3 = 2 mm); and in column W5, a negative number indicates a situation in which the first side of the first welding mark 61 is located on the non-coated region 112 (for example, W5 = -3 mm in Table 1 means that the first side of the first welding mark 61 is located on the non-coated region 112, W5 = 3 mm), and a positive number indicates a situation in which the first side of the first welding mark 61 is located on the electrode tab connecting sheet 5 (for example, W5 = 20 mm in Table 1 means that the first side of the first welding mark 61 is located on the electrode tab connecting sheet 5, W5 = 20 mm). In addition, "\" in Table 1 indicates "none." In addition, for Examples 1 to 33, the proportion of electrode tab folding can refer to a proportion of folding occurring to the electrode tab connecting sheet 5 and the non-coated region 112 (which can be understood in conjunction with FIG. 3A, FIG. 3B, FIG. 4A, FIG. 4B, and FIG. 4C), while for Comparative examples 1 and 2, the proportion of electrode tab folding can refer to a proportion of folding occurring to the non-coated region on the edge (that is, the electrode tab leading-out structure 14' in FIG. 2) (which can be understood in conjunction with FIG. 2).

It can be seen from analysis of individual sets of data shown in Table 1 that for the electrochemical apparatus 10 in the examples of this application (that is, Examples 1 to 33), the situation in which the electrode tab in the anode electrode plate of the electrochemical apparatus folds is significantly improved as compared to the electrochemical apparatuses in the related art (Comparative examples 1 and 2), thereby effectively increasing the preparation yield of the electrochemical apparatus.

The term "includes" and its variations as used herein are open-ended, meaning "including but not limited to." The term "based on" means "at least partially based on." The term "an embodiment" means "at least one embodiment"; the term "another embodiment" means "at least one other embodiment"; and the term "some embodiments" means "at least some embodiments." Relevant definitions of other terms will be given in the following description. It should be noted that, the concepts of "first," "second," and the like mentioned in this application are only used to distinguish different devices, modules, or units, and are not used to limit the sequence or interdependence of the functions performed by these devices, modules, or units.

It should be noted that, the modifiers "a," "an," and "multiple" mentioned in this application are indicative and not restrictive, and those skilled in the art should understand that, unless explicitly stated otherwise in the context, they should be understood as "one or more."

Persons skilled in the art can easily figure out other implementation solutions of this application after considering the present specification and practicing the present invention disclosed herein. This application is intended to cover any variations, functions, or adaptive changes of this application. These variations, functions, or adaptive changes comply with general principles of this application, and include common knowledge or a commonly used technical means in the technical field that is not disclosed in this application. The specification and these embodiments are merely considered as examples, and the actual scope and the spirit of this application are indicated by the appended claims.

## Claims

1. An electrochemical apparatus, comprising:
an electrode plate, wherein the electrode plate comprises a current collector and an active material layer disposed on the surface of the current collector, and in an unwinding state of the electrode plate, a plurality of non-coated regions extend along width direction of the electrode plate on edges of the current collector, an electrode tab connecting sheet is provided on the surface of each non-coated region, and the electrode tab connecting sheet is electrically connected to the non-coated region;
wherein thickness L1 of the electrode tab connecting sheet satisfies: 3 µm ≤ L1 ≤ 35 µm, and/or fracture strength S1 of the electrode tab connecting sheet satisfies: 200 MPa ≤ S1 ≤ 880 MPa.

2. The electrochemical apparatus according to claim 1, wherein the thickness L1 of the electrode tab connecting sheet satisfies: 8 µm ≤ L1 ≤ 20 µm.

3. The electrochemical apparatus according to claim 1, wherein the fracture strength S1 of the electrode tab connecting sheet satisfies: 420 Mpa ≤ S1 ≤ 800 MPa.

4. The electrochemical apparatus according to claim 1, wherein thickness L2 of the non-coated region satisfies: 2 µm ≤ L2 ≤ 18 µm.

5. The electrochemical apparatus according to claim 4, wherein the thickness L2 of the non-coated region satisfies: 3 µm ≤ L2 ≤ 10 µm.

6. The electrochemical apparatus according to claim 1, wherein fracture strength S2 of the non-coated region satisfies: 150 Mpa ≤ S2 ≤ 650 MPa.

7. The electrochemical apparatus according to claim 6, wherein the fracture strength S2 of the non-coated region satisfies: 280 Mpa ≤ S2 ≤ 550 MPa.

8. The electrochemical apparatus according to claim 1, wherein in the width direction of the electrode plate, width W1 of the electrode tab connecting sheet satisfies: 3 mm ≤ W1 ≤ 35 mm.

9. The electrochemical apparatus according to claim 8, wherein the width W1 of the electrode tab connecting sheet satisfies: 5 mm ≤ W1 ≤ 25 mm.

10. The electrochemical apparatus according to claim 1, wherein in the width direction of the electrode plate, width W2 of the non-coated region satisfies: 0.5 mm ≤ W2 ≤ 15 mm.

11. The electrochemical apparatus according to claim 10, wherein the width W2 of the non-coated region satisfies: 1 mm ≤ W2 ≤ 10 mm.

12. The electrochemical apparatus according to claim 1, wherein in the width direction of the electrode plate, the active material layer comprises a first side away from the non-coated region and a second side close to the non-coated region, and the electrode tab connecting sheet comprises a first side and a second side, wherein the first side of the electrode tab connecting sheet is close to the first side of the active material layer, and the second side of the electrode tab connecting sheet is away from the first side of the active material layer;
under the condition that the first side of the electrode tab connecting sheet is located on the active material layer, distance W3 between the first side of the electrode tab connecting sheet and the second side of the active material layer satisfies: 0 mm ≤ W3 ≤ 8 mm;
or,
under the condition that the first side of the electrode tab connecting sheet is located on the non-coated region, the distance W3 between the first side of the electrode tab connecting sheet and the second side of the active material layer satisfies: 0 mm ≤ W3 ≤ 10 mm.

13. The electrochemical apparatus according to claim 12, wherein the first side of the electrode tab connecting sheet is located on the non-coated region, and the distance W3 between the first side of the electrode tab connecting sheet and the second side of the active material layer satisfies: 0 mm ≤ W3 ≤ 5 mm.

14. The electrochemical apparatus according to claim 1, wherein a first welding mark is formed when the non-coated region and the electrode tab connecting sheet are welded; and
in the width direction of the electrode plate, the active material layer comprises a first side away from the non-coated region and a second side close to the non-coated region, and the first welding mark comprises a first side and a second side, wherein the first side of the first welding mark is close to the first side of the active material layer, and the second side of the first welding mark is away from the first side of the active material layer;
wherein the second side of the first welding mark is located on the electrode tab connecting sheet.

15. The electrochemical apparatus according to claim 14, wherein in the width direction of the electrode plate, width W4 of the first welding mark satisfies: 0.1 mm ≤ W4 ≤ 10 mm.

16. The electrochemical apparatus according to claim 14, wherein in the width direction of the electrode plate, the electrode tab connecting sheet comprises a first side and a second side, wherein the first side of the electrode tab connecting sheet is close to the first side of the active material layer, and the second side of the electrode tab connecting sheet is away from the first side of the active material layer;
under the condition that the first side of the first welding mark is located on the non-coated region, distance W5 between the first side of the first welding mark and the first side of the electrode tab connecting sheet satisfies: 0 mm ≤ W5 ≤ 5 mm;
or,
under the condition that the first side of the first welding mark is located on the electrode tab connecting sheet, the distance W5 between the first side of the first welding mark and the first side of the electrode tab connecting sheet satisfies: 0 mm ≤ W5 ≤ 25 mm.

17. The electrochemical apparatus according to claim 16, wherein under the condition that the first side of the first welding mark is located on the non-coated region, the distance W5 between the first side of the first welding mark and the first side of the electrode tab connecting sheet satisfies: 0 mm ≤ W5 ≤ 3 mm;
or,
under the condition that the first side of the first welding mark is located on the electrode tab connecting sheet, the distance W5 between the first side of the first welding mark and the first side of the electrode tab connecting sheet satisfies: 0 mm ≤ W5 ≤ 10 mm.

18. The electrochemical apparatus according to claim 14, wherein in the width direction of the electrode plate, the non-coated region comprises a first side and a second side, wherein the first side of the non-coated region is close to the first side of the active material layer, and the second side of the non-coated region is away from the first side of the active material layer;
under the condition that an overlap is present between a first projection of the second side of the first welding mark on the electrode tab connecting sheet and a second projection of the non-coated region on the electrode tab connecting sheet, distance W6 between the second side of the first welding mark and the second side of the non-coated region satisfies: 0 mm ≤ W6 ≤ 15 mm;
or,
under the condition that no overlap is present between a first projection of the second side of the first welding mark on the electrode tab connecting sheet and a second projection of the non-coated region on the electrode tab connecting sheet, the distance W6 between the second side of the first welding mark and the second side of the non-coated region satisfies: 0 mm ≤ W6 ≤ 7 mm.

19. The electrochemical apparatus according to claim 18, wherein under the condition that an overlap is present between the first projection of the second side of the first welding mark on the electrode tab connecting sheet and the second projection of the non-coated region on the electrode tab connecting sheet, the distance W6 between the second side of the first welding mark and the second side of the non-coated region satisfies: 0 mm ≤ W6 ≤ 10 mm;
or,
under the condition that no overlap is present between a first projection of the second side of the first welding mark on the electrode tab connecting sheet and a second projection of the non-coated region on the electrode tab connecting sheet, the distance W6 between the second side of the first welding mark and the second side of the non-coated region satisfies: 0 mm ≤ W6 ≤ 3 mm.

20. The electrochemical apparatus according to claim 14, wherein the electrochemical apparatus further comprises an electrode tab;
an electrical connection is formed between the electrode tab and the electrode tab connecting sheet through welding, and a second welding mark is formed on the electrode tab connecting sheet; and
in the width direction of the electrode plate, the second welding mark comprises a first side and a second side, wherein the first side of the second welding mark is close to the first side of the active material layer, and the second side of the second welding mark is away from the first side of the active material layer;
wherein distance W7 between the second side of the first welding mark and the first side of the second welding mark satisfies: 0 mm < W7 ≤ 10 mm.

21. The electrochemical apparatus according to claim 1, wherein welding tension F between the non-coated region and the electrode tab connecting sheet satisfies: 50 N ≤ F ≤ 1000 N.

22. The electrochemical apparatus according to claim 21, wherein the welding tension F between the non-coated region and the electrode tab connecting sheet satisfies: 280 N ≤ F ≤ 500 N.

23. The electrochemical apparatus according to claim 1, wherein the non-coated region and/or the electrode tab connecting sheet is a conductive foil material, and the resistance R per square millimeter of the conductive foil material satisfies: R < 20 mΩ.

24. The electrochemical apparatus according to claim 23, wherein the conductive foil material comprises at least one of a copper foil and a copper-plated foil material.

25. The electrochemical apparatus according to claim 1, wherein the electrode plate comprises a cathode electrode plate and an anode electrode plate.

26. An electrical device, comprising the electrochemical apparatus according to any one of claims 1 to 25.
